(19) **Europäisches Patentamt / European Patent Office / Office européen des brevets**

(11) **EP 4 668 747 A1**

(12) **EUROPEAN PATENT APPLICATION**
published in accordance with Art. 153(4) EPC

(43) Date of publication:
24.12.2025 Bulletin 2025/52

(21) Application number: 24769796.4

(22) Date of filing: 05.03.2024

(51) International Patent Classification (IPC):
*H04N 19/563* (2014.01) *H04N 19/13* (2014.01)

(52) Cooperative Patent Classification (CPC):
H04N 19/13; H04N 19/174; H04N 19/563;
H04N 19/85

(86) International application number:
PCT/CN2024/080069

(87) International publication number:
WO 2024/188102 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.03.2023 CN 202310290271

(71) Applicant: Huawei Technologies Co., Ltd.
Shenzhen, Guangdong 518129 (CN)

(72) Inventors:
• WANG, Danni
  Shenzhen, Guangdong 518129 (CN)
• YANG, Haitao
  Shenzhen, Guangdong 518129 (CN)
• LUO, Yi
  Shenzhen, Guangdong 518129 (CN)
• FENG, Junkai
  Shenzhen, Guangdong 518129 (CN)

(74) Representative: Maiwald GmbH
Engineering
Elisenhof
Elisenstrasse 3
80335 München (DE)

(54) **CODING METHOD AND DECODING METHOD, AND APPARATUS**

(57) Embodiments of this application relate to the field of media technologies, and disclose an encoding method, a decoding method, and an apparatus, to balance subjective quality of a padded picture. The method includes: performing picture padding on a to-be-encoded picture to obtain a padded picture; then, obtaining a coding unit based on the padded picture; next, determining coding information of the coding unit based on full padding information of the coding unit; and afterwards, encoding the coding unit based on the coding information to generate a bitstream. The full padding information indicates whether all samples in the coding unit are picture padding samples, and the coding information includes at least one of a number of padding bits or a coding length.

Perform picture padding on a to-be-encoded picture to obtain a padded picture — S901

Obtain a coding unit based on the padded picture — S902

Determine coding information of the coding unit based on full padding information of the coding unit, where the full padding information indicates whether all samples in the coding unit are picture padding samples, and the coding information includes at least one of a number of padding bits or a coding length — S903

Encode the coding unit based on the coding information to generate a bitstream — S904

FIG. 9

## Description

This application claims priority to Chinese Patent Application No. 202310290271.4, filed with the China National Intellectual Property Administration on March 13, 2023 and entitled "ENCODING METHOD, DECODING METHOD, AND APPARATUS", which is incorporated herein by reference in its entirety.

## TECHNICAL FIELD

Embodiments of this application relate to the field of media technologies, and in particular, to an encoding method, a decoding method, and an apparatus.

## BACKGROUND

A media device uses a display interface when transmitting media content. When transmitting the media content, the display interface may compress the media content through an encoding operation, to reduce a bandwidth in a media content transmission process. After receiving compressed media content, a receiving end needs to decode the compressed media content through a decoding operation, to restore the media content.

In a compression scenario, an input picture may be divided into a plurality of slices, and then each slice is encoded. Resolution of the input picture and division into the slices are usually determined according to product requirements. Therefore, the resolution of the picture may not meet a requirement for a number of divided slices. To ensure that an encoder and a decoder can still normally operate in this inputting case, the input picture needs to be padded before encoding so that the input picture can be divided into a required integer number of slices. Then, a padded picture is encoded and transmitted. A bitstream is decoded by the decoder to obtain a reconstructed picture. Finally, content of a padded area is cropped from the reconstructed picture to restore the original resolution.

In related technologies, subjective quality of different slices in the padded picture may be different, and consequently, subjective quality of the padded picture is uneven.

Therefore, how to balance the subjective quality of the padded picture is one of urgent problems that need to be resolved by persons skilled in the art.

## SUMMARY

Embodiments of this application provide an encoding method, a decoding method, and an apparatus, to balance subjective quality of a padded picture. To achieve the foregoing objective, the following technical solutions are used in embodiments of this application.

According to a first aspect, an embodiment of this application provides an encoding method. The method includes: performing picture padding on a to-be-encoded picture to obtain a padded picture; then, obtaining a coding unit based on the padded picture; next, determining coding information of the coding unit based on full padding information of the coding unit; and afterwards, encoding the coding unit based on the coding information to generate a bitstream. The full padding information indicates whether all samples in the coding unit are picture padding samples, and the coding information includes at least one of a number of padding bits or a coding length.

In a related technology, when the padded picture is coded, if there are excessive padding content in a slice and the padding content is simple, a fully padded coding unit in the slice occupies fewer coded bits, and correspondingly, a number of coded bits for a non-fully padded coding unit in the slice are more abundant than that in another slice without padding content or with less padding content. Consequently, reconstruction quality of non-padding content in the slice is different from that in another slice, and subjective quality of the padded picture is uneven.

However, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and then a coding parameter of the fully padded coding unit is adjusted to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture. In other words, compression performance of the fully padded coding unit is adjusted, to balance the subjective quality of the padded picture.

In a possible implementation, the coding unit may be encoded to generate a to-be-padded bitstream. The to-be-padded bitstream is padded with a bit based on the number of padding bits, to obtain the bitstream.

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and an initial bitstream (that is, the to-be-padded bitstream) generated for the fully padded coding unit is padded with a bit to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

In a possible implementation, fixed-length encoding may be performed on the coding unit based on the coding length to generate the bitstream.

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and then fixed-length encoding is performed on the coding unit based on a coding length to generate a bitstream, to increase a number of coded bits of the coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

In a possible implementation, when the coding unit is a target coding unit, the number of padding bits may be determined based on an actual number of bits of the coding unit and a first preset number of bits, where the target coding unit is a coding unit in which all samples are picture padding samples, and the actual number of bits is a number of bits of the to-be-padded bitstream corresponding to the coding unit.

Optionally, the number BitsGap of padding bits may meet: BitsGap=Max(X0-BCU, 0).

BCU is the number of bits of the to-be-padded bitstream corresponding to the coding unit (that is, an actual number of coded bits obtained by encoding a current coding block), and X0 is a first preset number of bits (that is, an agreed total number of bits of the bitstream corresponding to the coding unit when a full padding flag is 1).

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, then a number of padding bits is determined based on an actual number of bits of the coding unit and the first preset number of bits, and next an initial bitstream (that is, the to-be-padded bitstream) generated for the fully padded coding unit is padded with a bit based on the number of padding bits to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

In a possible implementation, when the coding unit is the target coding unit, the coding length may be determined based on a header information overhead of the coding unit, a second preset number of bits, and a number of samples in the coding unit, where the target coding unit is a coding unit in which all samples are picture padding samples.

Optionally, the coding length Bpppad may meet: Bpppad=(X1-X2)/Cusize.

X1 is the second preset number of bits (that is, an agreed total number of bits of the bitstream corresponding to the fully padded coding unit), X2 is the header information overhead of the current coding unit, and Cusize is the number of samples in the coding unit.

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, next a coding length is determined based on a header information overhead of the coding unit, the second preset number of bits, and a number of samples in the coding unit, and then fixed-length encoding is performed on the coding unit based on the coding length to generate a bitstream, to increase a number of coded bits of the coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

In a possible implementation, the full padding information further indicates whether the coding unit is located in a target slice of the padded picture, and the target slice is a horizontally picture padded slice.

In a possible implementation, the target coding unit is a coding unit in which all samples are picture padding samples and that is located in the target slice of the padded picture.

In a possible implementation, the to-be-encoded image may be divided into a plurality of slices, and then the to-be-encoded picture is padded with N columns of samples on a right boundary of a last column of the slices. N is a positive integer.

It may be understood that, compared with performing picture padding on each slice, performing picture padding on only the last column of slices of the picture can avoid increases in implementation costs and power consumption of hardware in picture padding.

According to a second aspect, an embodiment of this application further provides a decoding method. The method includes: obtaining a bitstream; decoding the bitstream to obtain a reconstructed block; and generating a reconstructed picture based on the reconstructed block. The bitstream is a bitstream generated by encoding a coding unit based on coding information of the coding unit, the coding information is determined based on full padding information of the coding unit, the full padding information indicates whether all samples in the coding unit are picture padding samples, and the coding information includes at least one of a number of padding bits or a coding length.

In a related technology, when a padded picture is coded, if there are excessive padding content in a slice and the padding content is simple, a fully padded coding unit in the slice occupies fewer coded bits, and correspondingly, a number of coded bits for a non-fully padded coding unit in the slice are more abundant than that in another slice without padding content or with less padding content. Consequently, reconstruction quality of non-padding content in the slice is different from that in another slice, and subjective quality of the padded picture is uneven.

However, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and then a coding parameter of the fully padded coding unit is adjusted to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

In a possible implementation, when the bitstream is a bitstream of a target coding unit, the bitstream is decoded based on the coding length to obtain the reconstructed block, where the target coding unit is a coding unit in which all samples are picture padding samples.

In a possible implementation, the full padding information further indicates whether the coding unit is located in a target slice of the padded picture, and the target slice is a horizontally padded slice of the picture.

In a possible implementation, the target coding unit is a coding unit in which all samples are picture padding samples and that is located in the target slice of the padded picture.

In a possible implementation, a picture padding area in the reconstructed picture may be cropped.

According to a third aspect, an embodiment of this application further provides an encoding apparatus. The apparatus includes a picture padding unit, a division unit, a determining unit, and an encoding unit. The picture padding unit is configured to perform picture padding on a to-be-encoded picture to obtain a padded picture. The division unit is configured to obtain a coding unit based on the padded picture. The determining unit is configured to determine coding information of the coding unit based on full padding information of the coding unit, where the full padding information indicates whether all samples in the coding unit are picture padding samples, and the coding information includes at least one of a number of padding bits or a coding length. The encoding unit is configured to encode the coding unit based on the coding information to generate a bitstream.

In a possible implementation, the encoding unit is specifically configured to: encode the coding unit to generate a to-be-padded bitstream; and pad the to-be-padded bitstream with a bit based on the number of padding bits, to obtain the bitstream.

In a possible implementation, the encoding unit is specifically configured to perform fixed-length encoding on the coding unit based on the coding length to generate the bitstream.

In a possible implementation, the determining unit is specifically configured to: when the coding unit is a target coding unit, determine the number of padding bits based on an actual number of bits of the coding unit and a first preset number of bits, where the target coding unit is a coding unit in which all samples are picture padding samples, and the actual number of bits is a number of bits of the to-be-padded bitstream corresponding to the coding unit.

In a possible implementation, the determining unit is specifically configured to: when the coding unit is the target coding unit, determine the coding length based on a header information overhead of the coding unit, a second preset number of bits, and a number of samples in the coding unit, where the target coding unit is a coding unit in which all samples are picture padding samples.

In a possible implementation, the full padding information further indicates whether the coding unit is located in a target slice of the padded picture, and the target slice is a horizontally picture padded slice.

In a possible implementation, the target coding unit is a coding unit in which all samples are picture padding samples and that is located in the target slice of the padded picture.

According to a fourth aspect, an embodiment of this application further provides a decoding apparatus. The apparatus includes a receiver unit, a decoding unit, and a reconstruction unit. The receiver unit is configured to obtain a bitstream, where the bitstream is a bitstream generated by encoding a coding unit based on coding information of the coding unit, the coding information is determined based on full padding information of the coding unit, the full padding information indicates whether all samples in the coding unit are picture padding samples, and the coding information includes at least one of a number of padding bits or a coding length. The decoding unit is configured to decode the bitstream to obtain a reconstructed block. The reconstruction unit is configured to generate a reconstructed picture based on the reconstructed block.

In a possible implementation, the decoding unit is specifically configured to: when the bitstream is a bitstream of a target coding unit, decode the bitstream based on the coding length to obtain the reconstructed block, where the target coding unit is a coding unit in which all samples are picture padding samples.

In a possible implementation, the full padding information further indicates whether the coding unit is located in a target slice of the padded picture, and the target slice is a horizontally padded slice of the picture.

In a possible implementation, the target coding unit is a coding unit in which all samples are picture padding samples and that is located in the target slice of the padded picture.

In a possible implementation, the reconstruction unit is further configured to crop a picture padding area in the reconstructed picture.

According to a fifth aspect, an embodiment of this application further provides an encoding apparatus. The apparatus includes at least one processor. When the at least one processor executes program code or instructions, the method according to any one of the first aspect or the possible implementations of the first aspect is implemented.

Optionally, the apparatus may further include at least one memory, and the at least one memory is configured to store the program code or the instructions.

According to a sixth aspect, an embodiment of this application further provides a decoding apparatus. The apparatus includes at least one processor. When the at least one processor executes program code or instructions, the method according to any one of the second aspect or the possible implementations of the second aspect is implemented.

Optionally, the apparatus may further include at least one memory, and the at least one memory is configured to store the program code or the instructions.

According to a seventh aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to an eighth aspect, an embodiment of this application further provides a computer-readable storage medium, configured to store a computer program. The computer program is configured to implement the method according to any one of the first aspect or the possible implementations of the first aspect.

According to a ninth aspect, an embodiment of this application further provides a computer program product including instructions. When the computer program product runs on a computer, the computer is enabled to implement the method according to any one of the first aspect or the possible implementations of the first aspect.

The encoding apparatus, the decoding apparatus, the computer storage medium, the computer program product, and the chip provided in embodiments are all configured to perform the encoding method and the decoding method provided above. Therefore, for beneficial effect that can be achieved by the encoding apparatus, the decoding apparatus, the computer storage medium, the computer program product, and the chip, refer to the beneficial effect of the encoding method and the decoding method provided above. Details are not described herein again.

BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some of embodiments of this application, and persons of ordinary skill in the art may still derive other accompanying drawings from these accompanying drawings without creative efforts.

FIG. 1a is an example block diagram of a coding system according to an embodiment of this application;

FIG. 1b is an example block diagram of a video coding system according to an embodiment of this application;

FIG. 2 is an example block diagram of a video encoder according to an embodiment of this application;

FIG. 3 is an example block diagram of a video decoder according to an embodiment of this application;

FIG. 4 is an example diagram of candidate picture blocks according to an embodiment of this application;

FIG. 5 is an example block diagram of a video coding device according to an embodiment of this application;

FIG. 6 is an example block diagram of an apparatus according to an embodiment of this application;

FIG. 7 is a diagram of a structure of an encoding system according to an embodiment of this application;

FIG. 8 is a diagram of a structure of another encoding system according to an embodiment of this application;

FIG. 9 is a diagram of an encoding method according to an embodiment of this application;

FIG. 10 is a diagram of a picture padding process according to an embodiment of this application;

FIG. 11 is a diagram of a structure of a decoding system according to an embodiment of this application;

FIG. 12 is a diagram of a decoding method according to an embodiment of this application;

FIG. 13 is a diagram of an encoding apparatus according to an embodiment of this application;

FIG. 14 is a diagram of a decoding apparatus according to an embodiment of this application; and

FIG. 15 is a diagram of a structure of a chip according to an embodiment of this application.

## DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, terms such as "example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the word like "example" or "for example" is intended to present a related concept in a specific manner.

In descriptions of embodiments of this application, "a plurality of' means two or more, unless otherwise specified.

First, the terms in embodiments of this application are explained.

Picture padding: An input picture can be divided into slices with a same length and a same width. If a width of the current picture is not an integer multiple of the width of the slices, or a height of the current picture is not an integer multiple of the height of the slices, a picture padding operation is required. A reconstructed picture or a decoded picture needs to be cropped before being output, and finally a picture of original resolution is output.

Fixed-length encoding: The fixed-length encoding is a kind of source encoding with a fixed codeword length. In the fixed-length encoding, lengths of all codewords are the same.

Header information overhead: The header information overhead is a bit overhead of a current coding unit except for coding residual data.

Interface compression: A media device uses a display interface when transmitting a picture or a video. A picture or video bitstream that passes through the display interface indicates a binary stream generated by encoding picture or video content.

Bitstream: The bitstream is a binary stream generated by encoding picture or video content.

Slice: An input picture may be divided into one or more slices. Each slice is divided into one or more coding units for coding.

Bitstream: The bitstream is a binary stream generated by encoding picture or video content.

Bit rate control: In a process of adjusting an output bit rate during encoding, the output bit rate is adjusted by analyzing information such as current picture content and a bitstream buffer margin and by changing an encoding quantization parameter and an encoding mode.

Quantization parameter (Quantization Parameter, QP): During encoding, a residual value generated by a prediction operation or a coefficient generated by a transform operation is quantized and then written into a bitstream. During decoding, a syntax element is dequantized to obtain the residual value or the coefficient. The QP is a parameter used in the quantization process. Generally, a larger QP value indicates a more obvious quantization degree. Adjusting the QP value directly affects a length of an encoded bitstream and quality of a decoded picture.

Data coding includes two parts: data encoding and data decoding. Data encoding is performed at a source side (or usually referred to as an encoder side), and usually includes processing (for example, compressing) raw data to reduce an amount of data required for representing the raw data (for more efficient storage and/or transmission). Data decoding is performed at a destination side (or usually referred to as a decoder side), and usually includes inverse processing relative to the encoder side to reconstruct the raw data. "Coding" of data in embodiments of this application should be understood as "encoding" or "decoding" of the data. A combination of an encoding part and a decoding part is also referred to as a codec (encoder/decoder, CODEC).

In a case of lossless data coding, the raw data can be reconstructed. In other words, reconstructed raw data has same quality as the raw data (it is assumed that no transmission loss or other data loss occurs during storage or transmission). In a case of lossy data coding, further compression is performed through, for example, quantization, to reduce an amount of data required for representing the raw data, and the raw data cannot be fully reconstructed at the decoder side. In other words, quality of reconstructed raw data is lower or worse than quality of the raw data.

Embodiments of this application may be applied to video data, other data having a compression/decompression requirement, and the like. The following describes embodiments of this application by using coding of the video data (which is briefly referred to as video coding) as an example. For other types of data (for example, picture data, audio data, integer data, and other data having a compression/decompression requirement), refer to the following descriptions. Details are not described in embodiments of this application. It should be noted that, compared with video coding, in a process of coding data such as the audio data and the integer data, the data does not need to be partitioned into blocks, but the data may be directly coded.

Video coding typically refers to processing of a sequence of pictures, where the sequence of pictures forms a video or a video sequence. In the field of video coding, the terms "picture (picture)", "frame (frame)", and "image (image)" may be used as synonyms.

Several video coding standards are used for "lossy hybrid video coding" (that is, spatial prediction and temporal prediction in a pixel domain are combined with 2D transform coding for applying quantization in a transform domain). Each picture of a video sequence is typically partitioned into a set of non-overlapping blocks, and coding is typically performed at a block level. To be specific, at an encoder side, a video is usually processed, that is, encoded, at a block (video block) level. For example, a prediction block is generated through spatial (intra) prediction and temporal (inter) prediction, the prediction block is subtracted from a current block (block being processed or to be processed) to obtain a residual block, and the residual block is transformed in the transform domain and quantized to reduce an amount of data that is to be transmitted (compressed). At a decoder side, an inverse processing part relative to the encoder is applied to an encoded block or a compressed block to reconstruct the current block for representation. Furthermore, the encoder needs to duplicate the decoder processing loop such that the encoder and the decoder generate identical predictions (for example, intra and inter predictions) and/or reconstructed pixels for processing, that is, coding, subsequent blocks.

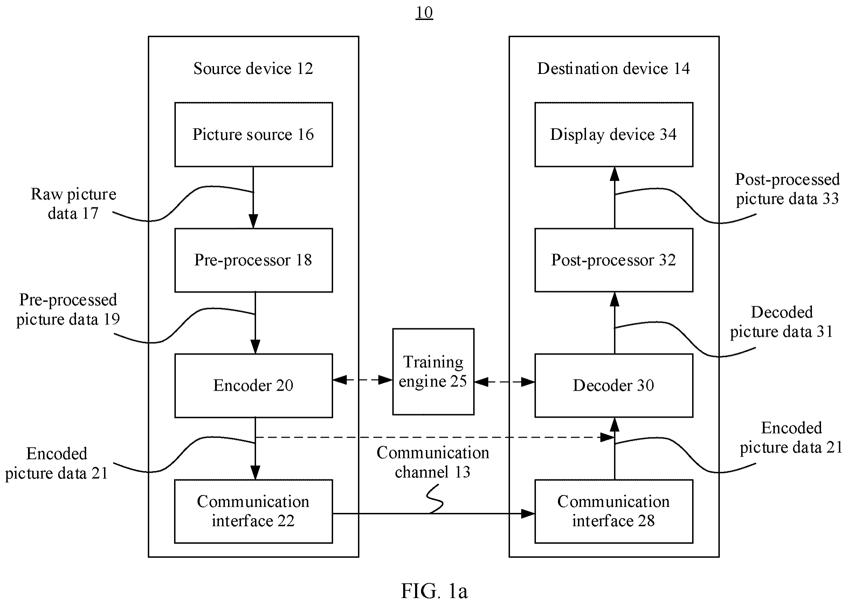

In the following embodiments of a coding system 10, an encoder 20 and a decoder 30 are described based on FIG. 1a to FIG. 3.

FIG. 1a is an example block diagram of a coding system 10 according to an embodiment of this application, for example, a video coding system 10 (also referred to as a coding system 10 for short) that may use technologies in embodiments of this application. A video encoder 20 (also referred to as an encoder 20 for short) and a video decoder 30 (also referred to as a decoder 30 for short) of the video coding system 10 represent devices that may be configured to perform technologies according to various examples described in embodiments of this application.

As shown in FIG. 1a, the coding system 10 includes a source device 12 configured to provide encoded picture data 21 such as an encoded picture to a destination device 14 for decoding the encoded picture data 21.

The source device 12 includes the encoder 20, and may additionally, that is, optionally, include a picture source 16, a pre-processor (or pre-processing unit) 18, for example, a picture pre-processor, and a communication interface (or a communication unit) 22.

The picture source 16 may include or be any type of picture capturing device configured to capture a real-world picture and the like, and/or any type of picture generation device, for example a computer graphics processing unit configured to generate a computer animated picture, or any type of device configured to obtain and/or provide a real-world picture, a computer generated picture, for example, screen content, a virtual reality (virtual reality, VR) picture, and/or any combination thereof (for example, an augmented reality (augmented reality, AR) picture). The picture source may be any type of memory or storage storing any of the aforementioned pictures.

To distinguish processing performed by the pre-processor (or pre-processing unit) 18, a picture (or picture data) 17 may also be referred to as a raw picture (or raw picture data) 17.

The pre-processor 18 is configured to receive the raw picture data 17, and pre-process the raw picture data 17, to obtain a pre-processed picture (or pre-processed picture data) 19. Pre-processing performed by the pre-processor 18 may, for example, include trimming, color format conversion (for example, from RGB to YCbCr), color correction, or de-noising. It may be understood that the pre-processing unit 18 may be an optional component.

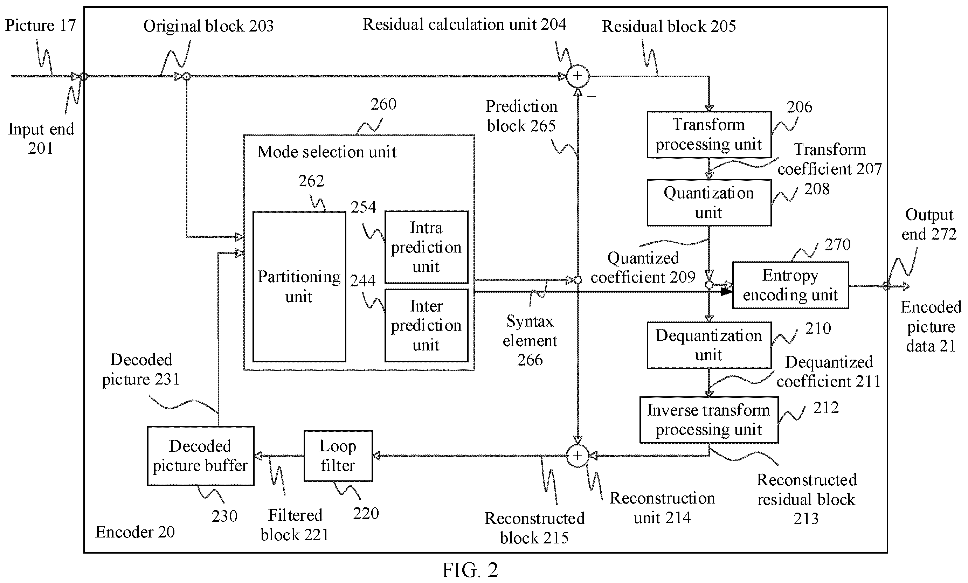

The video encoder (or encoder) 20 is configured to receive the pre-processed picture data 19 and provide the encoded picture data 21 (further details are described below, for example, based on FIG. 2).

A communication interface 22 of the source device 12 may be configured to: receive the encoded picture data 21 and send the encoded picture data 21 (or any further processed version thereof) through a communication channel 13 to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 of the destination device 14 is configured to: directly receive the encoded picture data 21 (or any further processed version thereof) from the source device 12 or any other source device such as a storage device, and provide the encoded picture data 21 for the decoder 30. For example, the storage device is an encoded picture data storage device.

The communication interface 22 and the communication interface 28 may be configured to send or receive the encoded picture data (or encoded data) 21 over a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded picture data 21 into an appropriate format, for example, packets, and/or process the encoded picture data using any kind of transmission encoding or processing for transmission over a communication link or communication network.

The communication interface 28, forming the counterpart of the communication interface 22, may be, for example, configured to: receive the transmitted data and process the transmission data using any type of corresponding transmission decoding or processing and/or de-packaging to obtain the encoded picture data 21.

Both the communication interface 22 and the communication interface 28 may be configured as unidirectional communication interfaces as indicated by an arrow for the communication channel 13 in FIG. 1a pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

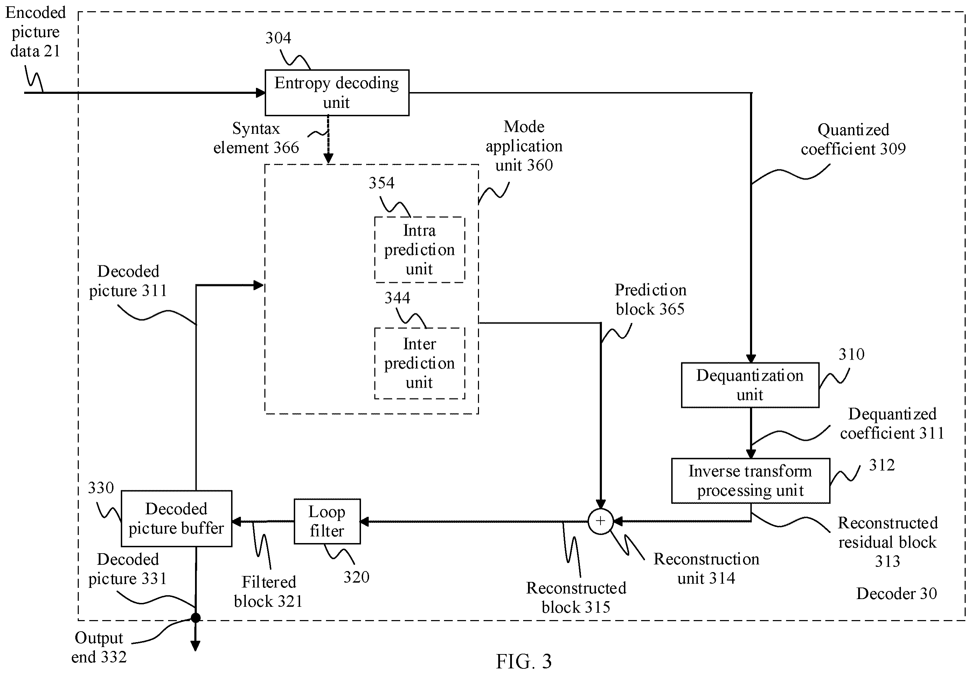

The video decoder (or decoder) 30 is configured to receive the encoded picture data 21 and provide decoded picture data (or a decoded picture) 31 (further details are described below, for example, based on FIG. 3).

The post-processor 32 is configured to post-process the decoded picture data 31 (also referred to as reconstructed picture data), for example, the decoded picture, to obtain post-processed picture data 33, for example, a post-processed picture. Post-processing performed by the post-processing unit 32 may include, for example, color format conversion (for example, conversion from YCbCr to RGB), color correction, trimming, resampling, or any other processing for generating the decoded picture data 31 for display by, for example, the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of other display.

The coding system 10 further includes a training engine 25. The training engine 25 is configured to train the encoder 20 (especially an entropy encoding unit 270 in the encoder 20) or the decoder 30 (especially an entropy decoding unit 304 in the decoder 30), to perform entropy encoding on a to-be-encoded coding unit based on estimated probability distribution obtained through estimation. For detailed descriptions of the training engine 25, refer to the following method embodiments.

Although FIG. 1a shows the source device 12 and the destination device 14 as separate devices, a device embodiment may alternatively include both the source device 12 and the destination device 14 or functions of both the source device 12 and the destination device 14, namely, the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

As will be apparent for the skilled persons based on the description, the existence and (exact) division into the different units or functions in the source device 12 and/or the destination device 14 as shown in FIG. 1a may vary depending on an actual device and application.

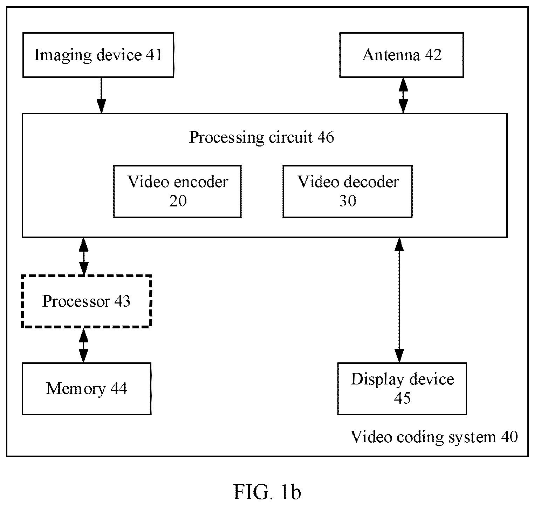

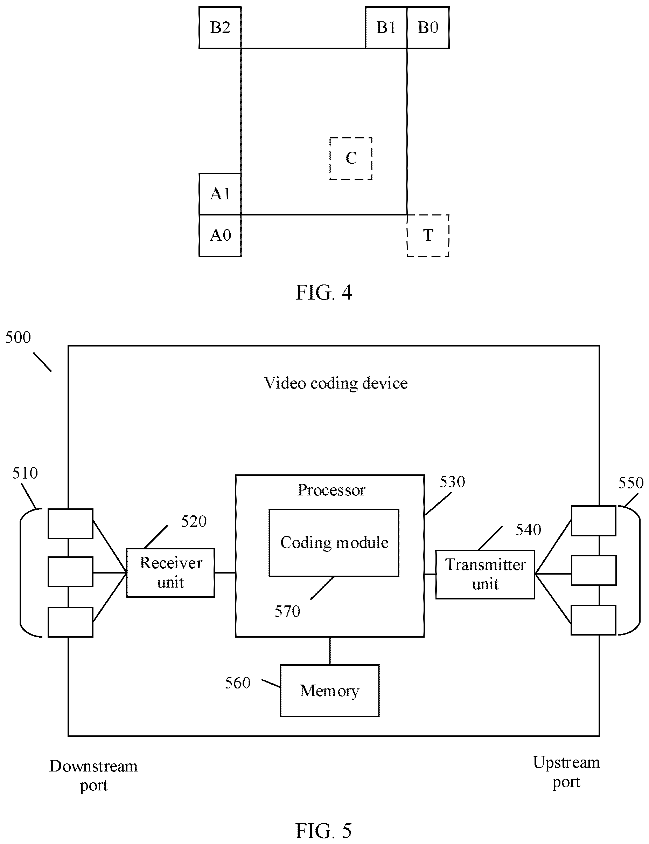

FIG. 1b is an example block diagram of a video coding system 40 according to an embodiment of this application. The encoder 20 (for example, the video encoder 20) or the decoder 30 (for example, the video decoder 30) or both the encoder 20 and the decoder 30 may be implemented by a processing circuit of the video coding system 40 shown in FIG. 1b, for example, one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, a video coding dedicated processor or any combination thereof. Refer to FIG. 2 and FIG. 3. FIG. 2 is an example block diagram of a video encoder according to an embodiment of this application, and FIG. 3 is an example block diagram of a video decoder according to an embodiment of this application. The encoder 20 may be implemented by the processing circuit 46 to embody various modules discussed with reference to the encoder 20 in FIG. 2 and/or any other encoder system or subsystem described in this specification. The decoder 30 may be implemented by the processing circuit 46 to embody various modules discussed with reference to the decoder 30 in FIG. 3 and/or any other decoder system or subsystem described in this specification. The processing circuit 46 may be configured to perform the various operations as discussed later. As shown in FIG. 5, if the technologies are implemented partially in software, a device may store instructions for the software in a suitable non-transitory computer-readable storage medium and may execute the instructions in hardware using one or more processors to perform the technologies in embodiments of this application. Either of the video encoder 20 and the video decoder 30 may be integrated as a part of a combined encoder/decoder (encoder/decoder, CODEC) in a single device, for example, as shown in FIG. 1b.

The source device 12 and the destination device 14 may include any one of various devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver devices, broadcast transmitter devices, monitor devices, or the like and may use no or any type of operating system. The source device 12 and the destination device 14 may also be devices in a cloud computing scenario, for example, virtual machines in the cloud computing scenario. In some cases, the source device 12 and the destination device 14 may be equipped with components for wireless communication. Therefore, the source device 12 and the destination device 14 may be wireless communication devices.

A virtual scenario application (application, APP), such as a virtual reality (virtual reality, VR) application, an augmented reality (augmented reality, AR) application, or a mixed reality (mixed reality, MR) application may be installed on each of the source device 12 and the destination device 14, and the VR application, the AR application, or the MR application may be run based on a user operation (for example, tapping, touching, sliding, shaking, or voice control). The source device 12 and the destination device 14 may capture pictures/videos of any object in an environment via a camera and/or a sensor, and then display a virtual object on a display device based on the captured pictures/videos. The virtual object may be a virtual object (namely, an object in a virtual environment) in a VR scenario, an AR scenario, or an MR scenario.

It should be noted that, in this embodiment of this application, the virtual scenario applications in the source device 12 and the destination device 14 may be built-in applications of the source device 12 and the destination device 14, or may be applications that are provided by a third-party service provider and that are installed by a user. This is not specifically limited herein.

In addition, real-time video transmission applications, such as live broadcast applications, may be installed on the source device 12 and the destination device 14. The source device 12 and the destination device 14 may capture pictures/videos via the camera, and then display the captured pictures/videos on the display device.

In some cases, the video coding system 10 shown in FIG. 1a is merely an example and the technologies provided in embodiments of this application are applicable to video coding settings (for example, video encoding or video decoding). These settings do not necessarily include any data communication between an encoding device and a decoding device. In other examples, data is retrieved from a local memory, sent through a network, or the like. A video encoding device may encode data and store encoded data into the memory, and/or a video decoding device may retrieve data from the memory and decode the data. In some examples, encoding and decoding are performed by devices that do not communicate with each other, but simply encode data into a memory and/or retrieve data from the memory and decode the data.

FIG. 1b is the example block diagram of the video coding system 40 according to this embodiment of this application. As shown in FIG. 1b, the video coding system 40 may include an imaging device 41, the video encoder 20, and the video decoder 30 (and/or a video encoder/decoder implemented by the processing circuit 46), an antenna 42, one or more processors 43, one or more memories 44, and/or a display device 45.

As shown in FIG. 1b, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a non-volatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented by using the logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to implement various modules discussed with reference to FIG. 2 and/or any other encoder system or subsystem described in this specification. The logic circuit may be configured to perform various operations described in this specification.

In some examples, the video decoder 30 may be implemented by the processing circuit 46 in a similar manner, to implement various modules discussed with reference to the video decoder 30 in FIG. 3 and/or any other decoder system or subsystem described in this specification. In some examples, the video decoder 30 implemented by using the logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to implement various modules discussed with reference to FIG. 3 and/or any other decoder system or subsystem described in this specification.

In some examples, the antenna 42 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining the coding partitioning). The video coding system 40 may further include the video decoder 30 that is coupled to the antenna 42 and that is configured to decode the encoded bitstream. The display device 45 is configured to present a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may perform entropy encoding on the syntax element into an encoded video bitstream. In such examples, the video decoder 30 may parse such syntax element and decode the associated video data accordingly.

For ease of description, embodiments of this application are described by referring to versatile video coding (versatile video coding, VVC) reference software or high-efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). Persons of ordinary skill in the art understand that embodiments of this application are not limited to the HEVC or the VVC.

Encoder and encoding method

As shown in FIG. 2, the video encoder 20 includes an input end (or input interface) 201, a residual calculation unit 204, a transform processing unit 206, a quantization unit 208, a dequantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254, and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

Refer to FIG. 2. The inter prediction unit is a trained target model (also referred to as a neural network), and the neural network is used to process an input picture, picture area, or picture block, to generate a predictor of the input picture block. For example, a neural network for inter prediction is used to receive an input picture, picture area, or picture block, and generate a predictor of the input picture, picture area, or picture block.

The residual calculation unit 204, the transform processing unit 206, the quantization unit 208, and the mode selection unit 260 form a forward signal path of the encoder 20, whereas the dequantization unit 210, the inverse transform processing unit 212, the reconstruction unit 214, a buffer 216, the loop filter 220, the decoded picture buffer (decoded picture buffer, DPB) 230, the inter prediction unit 244, and the intra prediction unit 254 form a backward signal path of the encoder. The backward signal path of the encoder 20 corresponds to the signal path of the decoder (refer to the decoder 30 in FIG. 3). The dequantization unit 210, the inverse transform processing unit 212, the reconstruction unit 214, the loop filter 220, the decoded picture buffer 230, the inter prediction unit 244, and the intra prediction unit 254 further form a "built-in decoder" of the video encoder 20.

Picture and picture partitioning (picture and block)

The encoder 20 may be configured to receive, for example, via the input end 201, a picture (or picture data) 17, for example, a picture in a sequence of pictures forming a video or video sequence. The received picture or picture data may also be a pre-processed picture (or pre-processed picture data) 19. For ease of simplicity, the picture 17 is used in the following description. The picture 17 may also be referred to as a current picture or a to-be-encoded picture (in particular in video coding to distinguish the current picture from other pictures, for example, previously encoded and/or decoded pictures of a same video sequence, namely, a video sequence that also includes the current picture).

A (digital) picture is or may be considered as a two-dimensional array or matrix including samples with intensity values. A sample in the array may also be referred to as a pixel (pixel or pel) (a short form of a picture element). Quantities of samples in horizontal and vertical directions (or axes) of the array or picture define the size and/or resolution of the picture. For representation of color, three color components are usually employed, that is, the picture may be represented as or include three sample arrays. In an RBG format or color space, a picture includes a corresponding red, green and blue sample array. However, in video coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y represents luma or gray level intensity (for example, both are the same in a gray-scale picture), while the two chrominance (chrominance, chroma for short) components Cb and Cr represent chroma or color information components. Accordingly, a picture in a YCbCr format includes a luminance sample array of luminance sample values (Y), and two chrominance sample arrays of chrominance values (Cb and Cr). Pictures in the RGB format may be converted or transformed into the YCBCr format and vice versa, the process is also referred to as color transformation or conversion. If a picture is monochrome, the picture may include only a luminance sample array. Accordingly, a picture may be, for example, an array of luma samples in a monochrome format or an array of luma samples and two corresponding arrays of chroma samples in 4:2:0, 4:2:2, and 4:4:4 color formats.

In an embodiment, an embodiment of the video encoder 20 may include a picture partitioning unit (not shown in FIG. 2) configured to partition the picture 17 into a plurality of (usually non-overlapping) picture blocks 203. These blocks may also be referred to as root blocks, macro blocks (H.264/AVC), coding tree blocks (coding tree blocks, CTBs), or coding tree units (coding tree units, CTUs) in the H.265/HEVC and VVC standards. The partitioning unit may be configured to use a same block size for all pictures of a video sequence and a corresponding grid defining the block size, or to change a block size between pictures or subsets or groups of pictures, and partition each picture into corresponding blocks.

In other embodiments, the video encoder may be configured to directly receive the block 203 of the picture 17, for example, one, several or all blocks forming the picture 17. The picture block 203 may also be referred to as a current picture block or a to-be-coded coding unit.

Like the picture 17, the picture block 203 is also or may be considered as a two-dimensional array or matrix including samples with intensity values (sample values), although of a smaller dimension than the picture 17. In other words, the block 203 may include one sample array (for example, a luminance array in the case of a monochrome picture 17, or a luminance or chrominance array in the case of a color picture), three sample arrays (for example, one luminance array and two chrominance arrays in the case of a color picture 17), or any other number and/or type of arrays based on a used color format. Quantities of samples of the block 203 in the horizontal and vertical directions (or axes) define the size of the block 203. Accordingly, a block may be an array of M×N (M columns×N rows) samples, an array of M×N transform coefficients, or the like.

In an embodiment, the video encoder 20 shown in FIG. 2 is configured to encode the picture 17 block-wisely, for example, encode and predict each block 203.

In an embodiment, the video encoder 20 shown in FIG. 2 may be further configured to partition and/or encode the picture by using slices (also referred to as video slices), where the picture may be partitioned or encoded by using one or more slices (typically non-overlapping). Each slice may include one or more blocks (for example, coding tree units CTUs) or one or more block groups, for example, tiles (tiles) in the H.265/HEVC/VVC standard and bricks (bricks) in the VVC standard.

In an embodiment, the video encoder 20 shown in FIG. 2 may be further configured to partition and/or encode the picture by using slices/tile groups (also referred to as video tile groups) and/or tiles (also referred to as video tiles). The picture may be partitioned or encoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Residual calculation

The residual calculation unit 204 is configured to calculate a residual block 205 based on the picture block (or an original block) 203 and a prediction block 265 (where the prediction block 265 is described in detail subsequently), for example, obtain the residual block 205 in the pixel domain by subtracting a sample value of the prediction block 265 from a sample value of the picture block 203 sample-wisely (pixel-wisely).

Transform

The transform processing unit 206 is configured to apply a transform, for example, a discrete cosine transform (discrete cosine transform, DCT) or discrete sine transform (discrete sine transform, DST), on the sample values of the residual block 205 to obtain transform coefficients 207 in the transform domain. The transform coefficients 207 may also be referred to as transform residual coefficients and represent the residual block 205 in the transform domain.

The transform processing unit 206 may be configured to apply integer approximations of DCT/DST, such as transforms specified in H.265/HEVC. Compared with an orthogonal DCT transform, such integer approximations are usually scaled based on a factor. To preserve a norm of a residual block that is processed through forward transform and inverse transform, another scale factor is used as a part of a transform process. The scale factor is usually selected based on some constraints, for example, the scale factor being a power of two for a shift operation, a bit depth of the transform coefficient, and a tradeoff between accuracy and implementation costs. For example, a specific scale factor is specified for the inverse transform by the inverse transform processing unit 212 at the encoder 20 side (and a corresponding inverse transform by, for example, an inverse transform processing unit 312 at the decoder 30 side), and correspondingly, a corresponding scale factor may be specified for the forward transform by the transform processing unit 206 at the encoder 20 side.

In an embodiment, the video encoder 20 (correspondingly, the transform processing unit 206) may be configured to output a transform parameter like one or more transform types, for example, directly output the transform parameter or output the transform parameter after the transform parameter is encoded or compressed by the entropy encoding unit 270, so that, for example, the video decoder 30 may receive and use the transform parameter for decoding.

Quantization

The quantization unit 208 is configured to quantize the transform coefficients 207 to obtain quantized transform coefficients 209, for example, by applying scalar quantization or vector quantization. The quantized transform coefficient 209 may also be referred to as a quantized residual coefficient 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index to a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step, and corresponding or inverse dequantization, for example, by the dequantization unit 210, may include multiplication by the quantization step. Embodiments according to some standards such as the HEVC, may be configured to use a quantization parameter to determine the quantization step. Generally, the quantization step size may be calculated based on a quantization parameter by using a fixed point approximation of an equation including division. Additional scale factors may be introduced for quantization and dequantization to restore the norm of the residual block, where the norm of the residual block may be modified because of a scale used in the fixed point approximation of the equation for the quantization step and the quantization parameter. In one example implementation, the scaling of the inverse transform and dequantization might be combined. Alternatively, customized quantization tables may be used and signaled from the encoder to the decoder, for example, in a bitstream. The quantization is a lossy operation, where the loss increases with increasing of the quantization step size.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

Dequantization

The dequantization unit 210 is configured to apply the dequantization of the quantization unit 208 on the quantized coefficients to obtain dequantized coefficients 211, for example, by applying the dequantization scheme of the quantization scheme applied by the quantization unit 208 based on or using the same quantization step size as the quantization unit 208. The dequantized coefficients 211 may also be referred to as dequantized residual coefficients 211 and correspond, although typically not identical to the transform coefficients due to the loss by quantization, to the transform coefficients 207.

Inverse transform

The inverse transform processing unit 212 is configured to apply the inverse transform of the transform applied by the transform processing unit 206, for example, an inverse discrete cosine transform (discrete cosine transform, DCT) or inverse discrete sine transform (discrete sine transform, DST), to obtain a reconstructed residual block 213 (or corresponding dequantized coefficients 213) in the pixel domain. The reconstructed residual block 213 may also be referred to as a transform block 213.

Reconstruction

The reconstruction unit 214 (for example, an adder 214) is configured to add the transform block 213 (that is, the reconstructed residual block 213) to the prediction block 265 to obtain a reconstructed block 215 in the pixel domain, for example, by sample-wisely adding the sample values of the reconstructed residual block 213 and the sample values of the prediction block 265.

Filtering

A loop filter unit 220 (or "loop filter" 220 for short), is configured to filter the reconstructed block 215 to obtain a filtered block 221, or in general, to filter reconstructed samples to obtain filtered sample values. The loop filter unit is, for example, configured to smooth pixel transitions, or otherwise improve the video quality. The loop filter unit 220 may include one or more loop filters such as a deblocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. In an example, the loop filter unit 220 may include a deblocking filter, a SAO filter, and an ALF. The order of the filtering process may be the deblocking filter, SAO filter, and ALF. For another example, a process referred to as luma mapping with chroma scaling (luma mapping with chroma scaling, LMCS) (namely, an adaptive in-loop reshaper) is added. This process is performed before deblocking. In another example, a deblocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 220 is shown as the loop filter in FIG. 2, in another configuration, the loop filter unit 220 may be implemented as a post loop filter. The filtered block 221 may also be referred to as a filtered reconstructed block 221.

In an embodiment, the video encoder 20 (correspondingly, the loop filter unit 220) may be configured to output loop filter parameters (such as a SAO filter parameter, an ALF parameter, or an LMCS parameter), for example, directly output the loop filter parameters or output the loop filter parameters after entropy encoding is performed on the loop filter parameters by the entropy encoding unit 270, so that, for example, the decoder 30 may receive and use a same loop filter parameter or different loop filter parameters for decoding.

Decoded picture buffer

The decoded picture buffer (decoded picture buffer, DPB) 230 may be a memory that stores reference pictures, or in general reference picture data, for encoding video data by the video encoder 20. The DPB 230 may be formed by any one of a variety of memory devices, such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of storage device. The decoded picture buffer 230 may be configured to store one or more filtered blocks 221. The decoded picture buffer 230 may be further configured to store other previously filtered blocks, for example, previously reconstructed and filtered blocks 221, of a same current picture or different pictures such as previously reconstructed pictures, and may provide complete previously reconstructed, that is, decoded, pictures (and corresponding reference blocks and samples) and/or a partially reconstructed current picture (and a corresponding reference block and sample), for, for example, inter prediction. The decoded picture buffer 230 may be further configured to store one or more unfiltered reconstructed blocks 215, or generally store unfiltered reconstructed samples, for example, the reconstructed block 215 that is not filtered by the loop filter unit 220, or a reconstructed block or a reconstructed sample on which no any other processing is performed.

Mode selection (partitioning and prediction)

The mode selection unit 260 includes the partitioning unit 262, the inter prediction unit 244, and the intra prediction unit 254, and is configured to receive or obtain raw picture data such as the original block 203 (the current block 203 of the current picture 17) and the reconstructed picture data, for example, a filtered and/or unfiltered reconstructed sample or reconstructed block of a same picture (the current picture) and/or one or more previously decoded pictures, from the decoded picture buffer 230 or another buffer (for example, a column buffer, not shown in FIG. 2). The reconstructed picture data is used as reference picture data for prediction, for example, inter prediction or intra prediction, to obtain a prediction block 265 or predictor 265.

The mode selection unit 260 may be configured to determine or select partitioning for a current block (including non-partitioning) and a prediction mode (for example, an intra or inter prediction mode) and generate a corresponding prediction block 265, which is used for calculation of the residual block 205 and for reconstruction of the reconstructed block 215.

In an embodiment, the mode selection unit 260 may be configured to select partitioning and prediction modes (for example, from prediction modes supported by or available to the mode selection unit 260). The prediction mode provides best matching or a minimum residual (the minimum residual means better compression for transmission or storage), provides minimum signaling overheads (the minimum signaling overheads mean better compression for transmission or storage), or considers or balances both the minimum residual and the minimum signaling overheads. The mode selection unit 260 may be configured to determine the partitioning and prediction modes based on rate distortion optimization (rate distortion Optimization, RDO), that is, select the prediction mode that provides a minimum rate distortion optimization. Terms like "best", "lowest", and "optimal" in the specification do not necessarily mean overall "best", "lowest", and "optimal", but may also refer to the fulfillment of a termination or selection criterion like a value exceeding or falling below a threshold or other constraints leading potentially to a "sub-optimum selection" but reducing complexity and processing time.

In other words, the partitioning unit 262 may be configured to partition a picture from a video sequence into a sequence of coding tree units (coding tree units, CTUs), and the CTU 203 may be further partitioned into smaller block partitions or sub-blocks (which form the blocks again), for example, iteratively using quad-tree partitioning (quad-tree partitioning, QT), binary-tree partitioning (binary-tree partitioning, BT) or triple-tree partitioning (triple-tree partitioning, TT) or any combination thereof, and to perform, for example, prediction for each of the block partitions or sub-blocks, where mode selection includes selection of a tree structure of the partitioned block 203 and prediction modes applied to each of the block partitions or sub-blocks.

In the following partitioning (for example, by the partitioning unit 262) and prediction processing (for example, by the inter prediction unit 244 and intra prediction unit 254) performed by the video encoder 20 will be explained in more detail.

Partitioning

The partitioning unit 262 may partition (or split) a picture block (or a CTU) 203 into smaller partitions, for example, square or rectangular smaller blocks. For a picture that has three sample arrays, a CTU includes a block of N×N luminance samples and two corresponding blocks of chrominance samples. A maximum allowed size of the luma block in the CTU is specified to be 128×128 in the developing versatile video coding (versatile video coding, VVC) standard, but it may be specified to be a value rather than 128×128 in the future, for example, 256×256. The CTUs of a picture may be clustered/grouped as slices/tile groups, tiles, or bricks. A tile covers a rectangular area of a picture, and a tile may be divided into one or more bricks. A brick includes a plurality of CTU rows in a tile. A tile that is not partitioned into a plurality of bricks can be referred to as a brick. However, a brick is a true subset of a tile and is not referred to as a tile. Two modes of tile groups, that is, a raster-scan slice/tile group mode and a rectangular slice mode, are supported in VVC. In the raster-scan tile group mode, a slice/tile group includes a sequence of tiles in tile raster scan of a picture. In the rectangular slice mode, a slice includes a plurality of bricks of a picture that collectively form a rectangular area of the picture. The bricks within a rectangular slice are in the order of brick raster scan of the slice. These smaller blocks (which may also be referred to as sub-blocks) may be further partitioned into even smaller partitions. This is also referred to as tree partitioning or hierarchical tree partitioning. A root block, for example, at a root tree level 0 (a hierarchy level 0, and a depth 0) may be recursively partitioned into two or more blocks at a next lower tree level, for example, nodes at a tree level 1 (a hierarchy level 1, and a depth 1). These blocks may be again partitioned into two or more blocks of a next lower level, for example, a tree level 2 (a hierarchy level 2, a depth 2), and the like until the partitioning is terminated (for example, because a termination criterion is fulfilled, for example, a maximum tree depth or minimum block size is reached). Blocks which are not further partitioned are also referred to as leaf-blocks or leaf nodes of the tree. A tree using partitioning into two partitions is referred to as a binary tree (binary-tree, BT), a tree using partitioning into three partitions is referred to as a ternary tree (ternary-tree, TT), and a tree using partitioning into four partitions is referred to as a quad tree (quad-tree, QT).

For example, a coding tree unit (CTU) may be or include a CTB of luminance samples, two corresponding CTBs of chrominance samples of a picture that has three sample arrays, a CTB of samples of a monochrome picture, or a CTB of samples of a picture that is encoded by using three separate color planes and syntax structures (for coding the samples). Correspondingly, a coding tree block (CTB) may be a block of N×N samples for some value of N such that the division of a component into CTBs is a partitioning. A coding unit (coding unit, CU) may be or include a coding block of luma samples, two corresponding coding blocks of chroma samples of a picture that has three sample arrays, or a coding block of samples of a monochrome picture or a picture that is coded using three separate color planes and syntax structures (for coding the samples). Correspondingly a coding block (CB) may be a block of M×N samples for some values of M and N such that the division of a CTB into coding blocks is a partitioning.

In embodiments, for example, according to HEVC, a coding tree unit (CTU) may be split into a plurality of CUs by using a quad-tree structure denoted as coding tree. The decision whether to code a picture area using inter (temporal) or intra (spatial) prediction is made at the leaf CU level. Each leaf CU can be further split into one, two, or four PUs based on a PU splitting type. Inside one PU, the same prediction process is applied and the relevant information is transmitted to the decoder on a PU basis. After the residual block is obtained by applying the prediction process based on the PU splitting type, a leaf CU can be partitioned into transform units (TUs) based on another quad-tree structure similar to a coding tree for the CU.

For example, in an embodiment, according to a developing latest video coding standard (referred to as versatile video coding (VVC)), a combined quad tree with a nested multi-type tree (such as a binary tree and a ternary tree) is used to split a segmentation structure for partitioning a coding tree unit. In a coding tree structure in a coding tree unit, a CU may be square or rectangular. For example, the coding tree unit (CTU) is first partitioned by a quad-tree structure. A quad-tree leaf node is further partitioned by a multi-type tree structure. There are four splitting types in the multi-type tree structure: vertical binary-tree splitting (SPLIT_BT_VER), horizontal binary-tree splitting (SPLIT_BT_HOR), vertical ternary splitting (SPLIT_TT_VER), and horizontal ternary-tree splitting (SPLIT_TT_HOR). Leaf nodes of the multi-type tree are referred to as coding units (CUs). Such segmentation is used for prediction and transform processing without any other partitioning, unless the CU is excessively large for a maximum transform length. This means that, in most cases, the CU, the PU, and the TU have a same block size in the quad tree with a nested multi-type tree coding block structure. An exception occurs when a maximum supported transform length is smaller than a width or height of a color component of the CU. A unique signaling mechanism of partition splitting information in the quad tree with the nested multi-type tree coding structure is formulated in the VVC. In the signaling mechanism, a coding tree unit (CTU) is treated as a root of a quad tree and is first partitioned by a quad tree structure. Each quad-tree leaf node (when sufficiently large to allow it) is then further partitioned by a multi-type tree structure. In the multi-type tree structure, a first flag (mtt_split_cu_flag) is signaled to indicate whether the node is further partitioned; when the node is further partitioned, a second flag (mtt_split_cu_vertical_flag) is signaled to indicate a splitting direction, and then a third flag (mtt_split_cu_binary_flag) is signaled to indicate whether the splitting is binary-tree splitting or ternary-tree splitting. Based on values of mtt_split_cu_vertical_flag and mtt_split_cu_binary_flag, the decoder may derive a multi-type tree split mode (MttSplitMode) of the CU based on a predefined rule or table. It should be noted that, for a specific design, for example, a 64×64 luma block and 32×32 chroma pipeline design in VVC hardware decoders, TT splitting is not allowed when either a width or a height of a luma coding block is greater than 64. TT splitting is also not allowed when a width or a height of a chroma coding block is greater than 32. In the pipeline design, a picture is split into a plurality of virtual pipeline data units (virtual pipeline data units, VPDUs), and the VPDUs are defined as non-overlapping units in the picture. In the hardware decoder, consecutive VPDUs are simultaneously processed in a plurality of pipeline stages. A VPDU size is roughly proportional to a buffer size in most pipeline stages. Therefore, a small VPDU size needs to be kept. In most hardware decoders, the VPDU size can be set to maximum transform block (TB) size. However, in the VVC, ternary-tree (TT) partitioning and binary-tree (BT) partitioning may lead to an increase in the VPDU size.

In addition, it should be noted that, when a portion of a tree node block exceeds the bottom or right picture boundary, the tree node block is forced to be split until the all samples of every coded CU are located inside the picture boundaries.

For example, an intra sub-partition (intra sub-partition, ISP) tool may divide a luminance intra prediction block vertically or horizontally into two or four sub-partitions based on a block size.

In one example, the mode selection unit 260 of the video encoder 20 may be configured to perform any combination of the partitioning techniques described herein.

As described above, the video encoder 20 is configured to determine or select a best or an optimum prediction mode from a set of (pre-determined) prediction modes. The prediction mode set may include, for example, an intra prediction mode and/or an inter prediction mode.

Intra prediction

A set of intra-prediction modes may include 35 different intra prediction modes, for example, non-directional modes such as a DC (or average) mode and a planar mode, or directional modes such as those defined in HEVC, or may include 67 different intra prediction modes, for example, non-directional modes such as a DC (or average) mode and a planar mode, or directional modes such as those defined in VVC. As an example, several conventional angular intra prediction modes are adaptively replaced with wide-angle intra prediction modes for the non-square blocks, for example, as defined in VVC. As another example, to avoid division operations for DC prediction, only the longer side is used to compute the average for non-square blocks. In addition, the results of intra prediction of planar mode may be further modified by using a position dependent intra prediction combination (position dependent intra prediction combination, PDPC) method.

The intra prediction unit 254 is configured to use reconstructed samples of neighboring blocks of a same current picture in an intra prediction mode of the set of intra prediction modes, to generate an intra prediction block 265.

The intra prediction unit 254 (or in general the mode selection unit 260) is further configured to output intra prediction parameters (or in general information indicative of the selected intra prediction mode for the block) to the entropy encoding unit 270 in form of syntax elements 266 for inclusion into the encoded picture data 21, so that, for example, the video decoder 30 may receive and use the prediction parameters for decoding.

Intra prediction modes in HEVC include a direct current prediction mode, a planar prediction mode, and 33 angular prediction modes. That is, there are 35 candidate prediction modes in total. A current block may use pixels of reconstructed picture blocks on left and upper sides as references to perform intra prediction. A picture block that is in a surrounding area of the current block and that is used to perform intra prediction on the current block becomes a reference block, and a pixel in the reference block is referred to as a reference pixel. In the 35 candidate prediction modes, the direct current prediction mode is applicable to an area whose texture is flat in the current block, and all pixels in the area use an average value of reference pixels in the reference block as prediction. The planar prediction mode is applicable to a picture block whose texture changes smoothly. For the current block that meets the condition, bilinear interpolation is performed by using a reference pixel in a reference block as prediction of all pixels in the current block. In the angular prediction mode, a value of a reference pixel in a corresponding reference block is copied along an angle as prediction of all pixels in the current block by using a feature that texture of the current block is highly correlated with texture of a neighboring reconstructed picture block.

An HEVC encoder selects an optimal intra prediction mode from the 35 candidate prediction modes for the current block, and writes the optimal intra prediction mode into a video bitstream. To improve coding efficiency of intra prediction, the encoder/decoder derives three most probable modes from respective optimal intra prediction modes of reconstructed picture blocks that use intra prediction in the surrounding area. If the optimal intra prediction mode selected for the current block is one of the three most probable modes, a first index is encoded to indicate that the selected optimal intra prediction mode is one of the three most probable modes. If the selected optimal intra prediction mode is not one of the three most probable modes, a second index is encoded to indicate that the selected optimal intra prediction mode is one of the other 32 modes (modes other than the three most probable modes in the 35 candidate prediction modes). The HEVC standard uses 5-bit fixed-length code as the second index.

A method for deriving the three most probable modes by the HEVC encoder includes: selecting optimal intra prediction modes of the left neighboring picture block and the upper neighboring picture block of the current block, and putting the optimal intra prediction modes into a set; and if the two optimal intra prediction modes are the same, retaining only one intra prediction mode in the set. If the two optimal intra prediction modes are the same and both are angular prediction modes, two angular prediction modes adjacent to this angle direction are further selected and added to the set. Otherwise, the planar prediction mode, the direct current mode, and a vertical prediction mode are sequentially selected and added to the set until a number of modes in the set reaches 3.

After performing entropy decoding on the bitstream, the HEVC decoder obtains mode information of the current block. The mode information includes an identifier indicating whether the optimal intra prediction mode of the current block is in the three most probable modes, an index of the optimal intra prediction mode of the current block in the three most probable modes, or an index of the optimal intra prediction mode of the current block in the other 32 modes.

Inter prediction

In a possible implementation, a set of inter prediction modes depends on available reference pictures (that is, previous at least partially decoded pictures, for example, stored in the DBP 230) and other inter prediction parameters, for example, whether the entire reference picture or only a part, for example, a search window area around the area of the current block, of the reference picture is used for searching for a best matching reference block, and/or for example, whether pixel interpolation is applied, for example, half-pixel, quarter-pixel and/or 1/16-pixel interpolation, or not.

In addition to the foregoing prediction modes, a skip mode and/or a direct mode may be applied.

For example, a merge candidate list of an extended merge prediction mode includes the following five classes of candidates in order: spatial MVP from spatial neighboring CUs, temporal MVP from collocated CUs, history-based MVP from an FIFO table, pairwise average MVP, and zero MVs. A bilateral-matching-based decoder side motion vector refinement (decoder side motion vector refinement, DMVR) may be applied to increase accuracy of the MVs of the merge mode. Merge mode with MVD (merge mode with MVD, MMVD) comes from merge mode with motion vector differences. An MMVD flag is signaled right after sending a skip flag and merge flag to specify whether the MMVD mode is used for a CU. A CU-level adaptive motion vector resolution (adaptive motion vector resolution, AMVR) scheme may be applied. AMVR allows an MVD of the CU to be coded in different precision. An MVD of a current CU may be adaptively selected based on a prediction mode of the current CU. When a CU is coded in the merge mode, a combined inter/intra prediction (combined inter/intra prediction, CIIP) mode may be applied to the current CU. Weighted averaging of the inter and intra prediction signals is performed to obtain the CIIP prediction. For affine motion compensated prediction, an affine motion field of a block is described by using motion information of motion vectors of two control points (four parameters) or three control points (six parameters). Subblock-based temporal motion vector prediction (subblock-based temporal motion vector prediction, SbTMVP) is similar to the temporal motion vector prediction (temporal motion vector prediction, TMVP) in HEVC, but predicts the motion vectors of the sub-CUs within the current CU. A bi-directional optical flow (bi-directional optical flow, BDOF), previously referred to as BIO, is a simpler version that requires much less computation, especially in terms of a number of multiplications and a size of a multiplier. In a triangle partition mode, a CU is split evenly into two triangle-shaped partitions through either diagonal splitting or anti-diagonal splitting. Besides, the bi-prediction mode is extended beyond simple averaging to allow weighted averaging of the two prediction signals.

The inter prediction unit 244 may include a motion estimation (motion estimation, ME) unit and a motion compensation (motion compensation, MC) unit (both not shown in FIG. 2). The motion estimation unit may be configured to receive or obtain the picture block 203 (the current picture block 203 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded pictures 231, or in other words, the current picture and the previously decoded pictures 231 may be a part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and to perform inter prediction based on or using the inter prediction parameter to obtain an inter prediction block 246. Motion compensation, performed by the motion compensation unit, may involve fetching or generating the prediction block based on the motion/block vector determined by motion estimation, and possibly performing interpolations to sub-pixel precision. Interpolation filtering may be performed to generate a sample of another pixel from a sample of a known pixel, to potentially increase a number of candidate prediction blocks that may be used to encode a picture block. Upon receiving the motion vector for the PU of the current picture block, the motion compensation unit may locate the prediction block to which the motion vector points in one of the reference picture lists.

The motion compensation unit may also generate syntax elements associated with the blocks and video slices for use by the video decoder 30 in decoding the picture blocks of the video slice. In addition or as an alternative to slices and respective syntax elements, tile groups and/or tiles and respective syntax elements may be generated or used.

In a process of obtaining a candidate motion vector list in an advanced motion vector prediction (advanced motion vector prediction, AMVP) mode, a motion vector (motion vector, MV) that may be added to the candidate motion vector list as an alternative includes MVs of spatially neighboring and temporally neighboring picture blocks of the current block. The MV of the spatially neighboring picture block may include an MV of a left candidate picture block of the current block and an MV of an upper candidate picture block of the current block. For example, FIG. 4 is an example diagram of candidate picture blocks according to an embodiment of this application. As shown in FIG. 4, a set of left candidate picture blocks includes {A0, A1}, a set of upper candidate picture blocks includes {B0, B1, B2}, and a set of temporally neighboring candidate picture blocks includes {C, T}. All the three sets may be added to the candidate motion vector list as alternatives. However, according to an existing coding standard, a maximum length of the candidate motion vector list for AMVP is 2. Therefore, it is necessary to determine to add MVs of a maximum of two picture blocks to the candidate motion vector list from the three sets in a specified order. The order may be as follows: The set of left candidate picture blocks {A0, A1} of the current block is preferentially considered (where A0 is first considered, and A1 is then considered if A0 is unavailable); then the set of upper candidate picture blocks {B0, B1, B2} of the current block is considered (where B0 is first considered, B1 is then considered if B0 is unavailable, and B2 is then considered if B1 is unavailable); and finally, the set of temporally neighboring candidate picture blocks {C, T} of the current block is considered (where T is first considered, and C is then considered if T is unavailable).

After the candidate motion vector list is obtained, an optimal MV is determined from the candidate motion vector list based on a rate distortion cost (rate distortion cost, RD cost), and a candidate motion vector with a minimum RD cost is used as a motion vector predictor (motion vector predictor, MVP) of the current block. The rate distortion cost is calculated according to the following formula:

$$J = SAD + \lambda R$$

J represents the RD cost, SAD is a sum of absolute differences (sum of absolute differences, SAD), obtained through motion estimation based on the candidate motion vector, between a pixel value of a prediction block and a pixel value of the current block, R represents a bit rate, and λ represents a Lagrange multiplier.

The encoder side transfers an index of the determined MVP in the candidate motion vector list to the decoder side. Further, the encoder side may perform motion search in an MVP-centered neighboring domain, to obtain an actual motion vector of the current block. The encoder side calculates a motion vector difference (motion vector difference, MVD) between the MVP and the actual motion vector, and transfers the MVD to the decoder side. The decoder side parses the index, finds the corresponding MVP in the candidate motion vector list based on the index, parses the MVD, and adds the MVD and the MVP to obtain the actual motion vector of the current block.

In a process of obtaining a candidate motion information list in a merge (Merge) mode, motion information that can be added to the candidate motion information list as an alternative includes motion information of the spatially neighboring picture block or temporally neighboring picture block of the current block. The spatially neighboring picture block and the temporally neighboring picture block may be shown in FIG. 4. Spatial candidate motion information in the candidate motion information list comes from five spatially neighboring blocks (A0, A1, B0, B1, and B2). If the spatially neighboring block is unavailable or in an intra prediction mode, motion information of the spatially neighboring block is not added to the candidate motion information list. Temporal candidate motion information of the current block is obtained by scaling an MV of a block at a corresponding position in a reference frame based on picture order counts (picture order counts, POCs) of the reference frame and a current frame. Whether a block at a position T in the reference frame is available is first determined. If the block is not available, a block at a position C is selected. After the candidate motion information list is obtained, optimal motion information is determined from the candidate motion information list based on the RD cost as motion information of the current block. The encoder side transfers an index value (denoted as a merge index) of a position of the optimal motion information in the candidate motion information list to the decoder side.

Entropy encoding

The entropy encoding unit 270 is configured to apply, for example, an entropy encoding algorithm or scheme (for example, a variable length coding (variable length coding, VLC) scheme, a context adaptive VLC (context adaptive VLC, CALVC) scheme, an arithmetic coding scheme, a binarization algorithm, context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy encoding methodology or technique) on the quantization residual coefficients 209, inter prediction parameters, intra prediction parameters, loop filter parameters and/or other syntax elements to obtain encoded picture data 21 which can be output via the output end 272, for example, in the form of an encoded bitstream 21, so that the video decoder 30 and the like can receive and use the parameters for decoding. The encoded bitstream 21 may be transmitted to the video decoder 30, or stored in a memory for later transmission or retrieval by the video decoder 30.

Another structural variation of the video encoder 20 may be used to encode the video stream. For example, a non-transform-based encoder 20 may quantize a residual signal directly without the transform processing unit 206 for some blocks or frames. In another implementation, the encoder 20 may have the quantization unit 208 and the dequantization unit 210 combined into a single unit.

Decoder and decoding method

As shown in FIG. 3, the video decoder 30 is configured to receive encoded picture data 21 (for example, the encoded bitstream 21), for example, encoded by the encoder 20, to obtain a decoded picture 331. The encoded picture data or bitstream includes information for decoding the encoded picture data, for example, data that represents picture blocks of an encoded video slice (and/or tile groups or tiles), and related syntax elements.

In the example of FIG. 3, the decoder 30 includes an entropy decoding unit 304, a dequantization unit 310, an inverse transform processing unit 312, a reconstruction unit 314 (for example, an adder 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described with respect to video encoder 100 from FIG. 2.

As explained with regard to the encoder 20, the dequantization unit 210, the inverse transform processing unit 212, the reconstruction unit 214, the loop filter 220, the decoded picture buffer DPB 230, the inter prediction unit 344, and the intra prediction unit 354 are further referred to as forming the "built-in decoder" of the video encoder 20. Accordingly, the dequantization unit 310 may be identical in function to the dequantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for the corresponding units and functions of the video encoder 20 are correspondingly applicable to the corresponding units and functions of the video decoder 30.

Entropy decoding

The entropy decoding unit 304 is configured to parse the bitstream 21 (or in general encoded picture data 21) and perform, for example, entropy decoding on the encoded picture data 21 to obtain quantized coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply the decoding algorithms or schemes corresponding to the encoding schemes as described with regard to the entropy encoding unit 270 of the encoder 20. The entropy decoding unit 304 may be further configured to provide the inter prediction parameter, the intra prediction parameter, and/or another syntax element to the mode application unit 360, and provide another parameter to another unit of the decoder 30. The video decoder 30 may receive the syntax elements at the video slice level and/or the video block level. In addition or as an alternative to slices and corresponding syntax elements, tile groups and/or tiles and corresponding syntax elements may be received or used.

Dequantization

The dequantization unit 310 may be configured to receive quantization parameters (quantization parameter, QP) (or generally, information related to dequantization) and quantized coefficients from the encoded picture data 21 (for example, by parsing and/or decoding by the entropy decoding unit 304) and to apply, based on the quantization parameters, a dequantization on the decoded quantized coefficients 309 to obtain dequantized coefficients 311, which may also be referred to as transform coefficients 311. The dequantization process may include use of a quantization parameter calculated by the video encoder 20 for each video block in the video slice to determine a degree of quantization and, likewise, a degree of dequantization that should be applied.

Inverse transform

The inverse transform processing unit 312 may be configured to: receive the dequantized coefficients 311, also referred to as the transform coefficients 311, and apply a transform to the dequantized coefficients 311 to obtain reconstructed residual blocks 213 in the pixel domain. The reconstructed residual blocks 213 may also be referred to as transform blocks 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, through parsing and/or decoding, for example, by the entropy decoding unit 304) to determine the transform to be applied to the dequantized coefficients 311.

Reconstruction

The reconstruction unit 314 (for example, the adder 314) may be configured to add the reconstructed residual block 313 to the prediction block 365 to obtain a reconstructed block 315 in the pixel domain, for example, by adding the sample values of the reconstructed residual block 313 and the sample values of the prediction block 365.

Filtering

The loop filter unit 320 (either in the coding loop or after the coding loop) is configured to filter the reconstructed block 315 to obtain a filtered block 321, for example, to smooth pixel transitions, or improve the video quality. The loop filter unit 320 may include one or more loop filters such as a deblocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. In an example, the loop filter unit 220 may include a deblocking filter, a SAO filter, and an ALF. The order of the filtering process may be the deblocking filter, SAO filter, and ALF. For another example, a process referred to as luma mapping with chroma scaling (luma mapping with chroma scaling, LMCS) (namely, an adaptive in-loop reshaper) is added. This process is performed before deblocking. In another example, a deblocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 320 is shown as the loop filter in FIG. 3, in another configuration, the loop filter unit 320 may be implemented as a post loop filter.

Decoded picture buffer

A decoded video block 321 of a picture is then stored in the decoded picture buffer 330. The decoded picture buffer 330 stores a decoded picture 331 as a reference picture, and the reference picture is used for subsequent motion compensation for another picture and/or for separate output and display.

The decoder 30 is configured to output the decoded picture 331, for example, via an output end 332, for presentation or viewing to a user.

Prediction

The inter prediction unit 344 may be identical to the inter prediction unit 244 (in particular to the motion compensation unit) and the intra prediction unit 354 may be identical to the intra prediction unit 254 in function, and performs split or partitioning decisions and prediction based on the partitioning and/or prediction parameters or respective information received from the encoded picture data 21 (for example, through parsing and/or decoding, for example, by the entropy decoding unit 304). The mode application unit 360 may be configured to perform the prediction (intra or inter prediction) per block based on reconstructed pictures, blocks or respective samples (filtered or unfiltered) to obtain the prediction block 365.

When the video slice is coded as an intra coded (intra coded, I) slice, the intra prediction unit 354 of the mode application unit 360 is configured to generate the prediction block 365 for a picture block of the current video slice based on a signaled intra prediction mode and data from previously decoded blocks of the current picture. When the video picture is coded as an inter coded (that is, B or P) slice, the inter prediction unit 344 (for example, the motion compensation unit) of the mode application unit 360 is configured to generate the prediction block 365 for a video block of the current video slice based on the motion vectors and other syntax elements received from the entropy decoding unit 304. For inter prediction, the prediction blocks may be produced from one of the reference pictures within one of the reference picture lists. The video decoder 30 may construct reference frame lists: a list 0 and a list 1, by using a default construction technology based on reference pictures stored in the DPB 330. The same or similar may be applied for or by embodiments using tile groups (for example, video tile groups) and/or tiles (for example, video tiles) in addition or alternatively to slices (for example, video slices), for example, a video may be coded using I, P, or B tile groups and /or tiles.

The mode application unit 360 is configured to determine the prediction information for a video block of the current video slice by parsing the motion vectors or other syntax elements, and use the prediction information to generate the prediction block for the current video block being decoded. For example, the mode application unit 360 uses some of the received syntax elements to determine a prediction mode (for example, intra or inter prediction) used to encode the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar may be applied for or by embodiments using tile groups (for example, video tile groups) and/or tiles (for example, video tiles) in addition or alternatively to slices (for example, video slices), for example, a video may be coded using I, P, or B tile groups and /or tiles.

In an embodiment, the video decoder 30 in FIG. 3 may be further configured to partition and/or decode a picture by using slices (also referred to as video slices), where the picture may be partitioned or decoded by using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 as shown in FIG. 3 may be configured to partition and/or decode the picture by using slices/tile groups (also referred to as video tile groups) and/or tiles (also referred to as video tiles), where a picture may be partitioned or decoded using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 can produce the output video stream without the loop filter unit 320. For example, a non-transform-based decoder 30 can dequantize the residual signal directly without the inverse transform processing unit 312 for some blocks or frames. In another implementation, the video decoder 30 can have the dequantization unit 310 and the inverse transform processing unit 312 combined into a single unit.

It should be understood that, in the encoder 20 and the decoder 30, a processing result of a current step may be further processed and then output to the next step. For example, after interpolation filtering, motion vector derivation, or loop filtering, a further operation, such as a clip (clip) or shift (shift) operation, may be performed on the processing result of the interpolation filtering, motion vector derivation, or loop filtering.

It should be noted that further operations may be performed on derived motion vectors of a current block (including but not limit to control point motion vectors in an affine mode, sub-block motion vectors in affine, planar, and ATMVP modes, temporal motion vectors, and so on). For example, the value of motion vector is constrained to a predefined range according to its representing bit. If the representation bit of the motion vector is bitDepth, the range is from - 2^(bitDepth-1) to 2^(bitDepth-1)-1, where the "^" represents exponentiation. For example, if bitDepth is set to 16, the range is -32768 to 32767; if bitDepth is set to 18, the range is -131072 to 131071. For example, the value of the derived motion vector (for example, the MVs of four $4\times4$ sub-blocks within one $8\times8$ block) is constrained such that the maximum difference between integer parts of the four $4\times4$ sub-block MVs is no more than N pixels, such as no more than 1 pixel. Two methods for limiting the motion vector based on bitDepth are provided herein.

Although video coding is mainly described in the foregoing embodiments, it should be noted that the embodiments of the coding system 10, the encoder 20, and the decoder 30 and other embodiments described in this specification may also be used for still picture processing or coding, that is, processing or coding of a single picture independent of any preceding or consecutive pictures in video coding. In general, the inter prediction unit 244 (the encoder) and the inter prediction unit 344 (the decoder) may not be available in a case in which picture processing is limited to a single picture 17. All other functions (also referred to as tools or technologies) of the video encoder 20 and the video decoder 30 may also be used for still picture processing, for example, residual calculation 204/304, transform 206, quantization 208, dequantization 210/310, (inverse) transform 212/312, partitioning 262/362, intra prediction 254/354, and/or loop filtering 220/320, entropy encoding 270, and entropy decoding 304.

FIG. 5 is an example block diagram of a video coding device 500 according to an embodiment of this application. The video coding device 500 is applicable to implementing the disclosed embodiments described in this specification. In an embodiment, the video coding device 500 may be a decoder such as the video decoder 30 in FIG. 1a or an encoder such as the video encoder 20 in FIG. 1a.

The video coding device 500 includes ingress ports 510 (or input ports 510) and a receiver unit (receiver unit, Rx) 520 for receiving data; a processor, a logic unit, or a central processing unit (central processing unit, CPU) 530 for processing the data, where for example, the processor 530 herein may be a neural network processing unit 530; a transmitter unit (transmitter unit, Tx) 540 and egress ports 550 (or output ports 550) for transmitting the data; and a memory 560 for storing the data. The video coding device 500 may also include optical-to-electrical (optical-to-electrical, OE) components and electrical-to-optical (electrical-to-optical, EO) components coupled to the ingress ports 510, the receiver unit 520, the transmitter unit 540, and the egress ports 550 for egress or ingress of optical or electrical signals.

The processor 530 is implemented by hardware and software. The processor 530 may be implemented as one or more processor chips, cores (for example, a multi-core processor), FPGAs, ASICs, and DSPs. The processor 530 communicates with the ingress ports 510, the receiver unit 520, the transmitter unit 540, the egress ports 550, and the memory 560. The processor 530 includes a coding module 570 (for example, a neural network-based coding module 570). The coding module 570 implements the embodiments disclosed above. For example, the coding module 570 implements, processes, prepares, or provides various coding operations. Therefore, the coding module 570 provides a substantial improvement to functions of the video coding device 500 and affects switching of the video coding device 500 to a different state. Alternatively, the coding module 570 is implemented by using instructions stored in the memory 560 and executed by the processor 530.

The memory 560 may include one or more disks, tape drives, and solid-state drives and may be used as an overflow data storage device, to store programs when such programs are selected for execution, and to store instructions and data that are read during program execution. The memory 560 may be volatile and/or nonvolatile and may be a read-only memory (read-only memory, ROM), a random access memory (random access memory, RAM), a ternary content-addressable memory (ternary content-addressable memory, TCAM), and/or a static random access memory (static random access memory, SRAM).

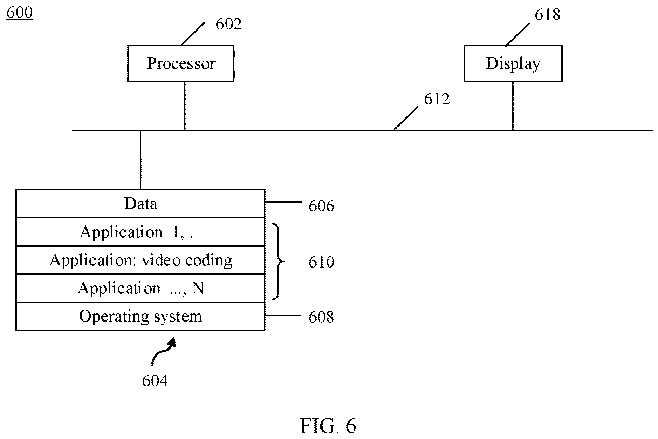

FIG. 6 is an example block diagram of an apparatus 600 according to an embodiment of this application. The apparatus 600 may be used as either or both of the source device 12 and the destination device 14 in FIG. 1a.

A processor 602 in the apparatus 600 may be a central processing unit. Alternatively, the processor 602 may be any other type of device or a plurality of devices, capable of manipulating or processing information existing or to be developed. Although the disclosed implementations can be implemented by using a single processor such as the processor 602 shown in the figure, advantages in speed and efficiency can be achieved by using more than one processor.

In an implementation, a memory 604 in the apparatus 600 may be a read-only memory (ROM) device or a random access memory (RAM) device. Any other appropriate type of storage device may be used as the memory 604. The memory 604 may include code and data 606 that are accessed by the processor 602 through a bus 612. The memory 604 may further include an operating system 608 and an application 610. The application 610 includes at least one program that permits the processor 602 to perform the method described in this specification. For example, the application 610 may include applications 1 to N, and further include a video coding application that performs the method described in this specification.

The apparatus 600 may further include one or more output devices, such as a display 618. In an example, the display 618 may be a touch-sensitive display combined with a display with a touch-sensitive element that can be used to sense a touch input. The display 618 may be coupled to the processor 602 through the bus 612.

Although the bus 612 in the apparatus 600 is described in this specification as a single bus, the bus 612 may include a plurality of buses. Further, a secondary storage may be directly coupled to another component of the apparatus 600 or may be accessed through a network and may include a single integrated unit, for example, a memory card or a plurality of units, for example, a plurality of memory cards. Therefore, the apparatus 600 may have a variety of configurations.

In a compression scenario, an input picture may be divided into a plurality of slices, and then each slice is encoded. Resolution of the input picture and division into the slices are usually determined according to product requirements. Therefore, the resolution of the picture may not meet a requirement for a number of divided slices. To ensure that an encoder and a decoder can normally operate in this inputting case, the input picture needs to be padded before encoding so that the input picture can be divided into a required integer number of slices. Then, a padded picture is encoded and transmitted. A bitstream is decoded by the decoder to obtain a reconstructed picture. Finally, content of a padded area is cropped from the reconstructed picture to restore the original resolution.

In related technologies, subjective quality of different slices in the padded picture may be different, and consequently, subjective quality of the padded picture is uneven.

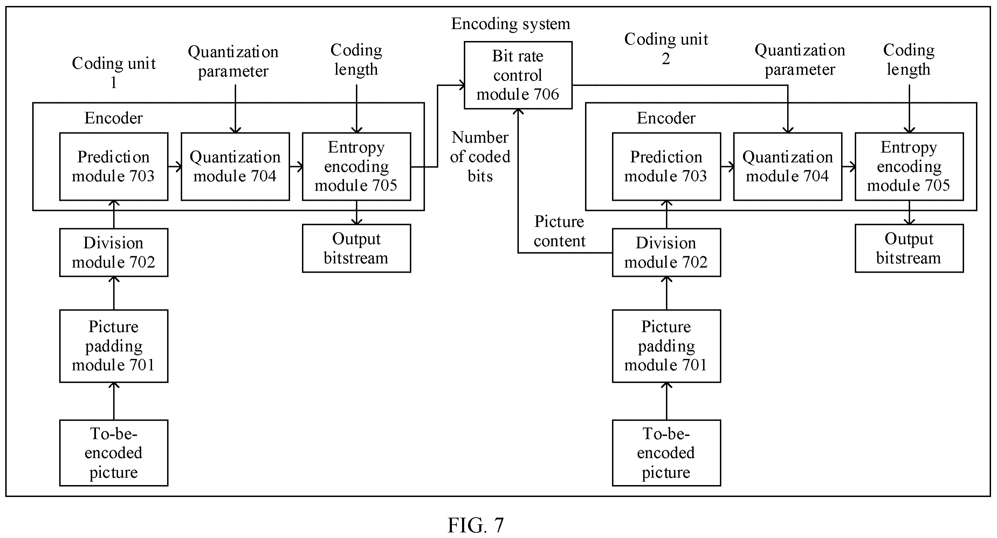

In view of this, an embodiment of this application provides an encoding method, to balance the subjective quality of the padded picture. The encoding method is applicable to an encoding system. FIG. 7 shows a possible existence form of the encoding system.

As shown in FIG. 7, the encoding system includes a picture padding module 701, a division module 702, a prediction module 703, a quantization module 704, an entropy encoding module 705, and a bit rate control module 706.

A to-be-encoded picture input into the encoding system is padded, and a padded picture is divided into coding units (which may also be referred to as coding blocks or picture blocks). After being input into an encoder, the coding units are processed by encoding modules such as a prediction module, a quantization module, and an entropy encoding module, and finally bitstreams (bitstreams) corresponding to the coding units are output. Bitstreams of all the coding units are concatenated to obtain a bitstream corresponding to the whole picture.

The picture padding module 701 is configured to perform picture padding on an input to-be-encoded picture.

The division module 702 is configured to divide a padded picture into coding units.

The prediction module 703 is configured to perform prediction on the coding units.

The quantization module 704 is configured to quantize the coding units based on a quantization parameter.

The entropy encoding module 705 is configured to perform entropy encoding on the coding units. In addition, the entropy encoding module 705 may further obtain a number of coded bits based on the coding units.

In a possible implementation, the entropy encoding module 705 may perform fixed-length encoding on a fully padded coding unit based on a set coding length Bpppad.

The bit rate control module 706 is configured to adjust an output bit rate. For example, the bit rate control module 706 may adjust the output bit rate based on the number of coded bits, a number of padding bits, and picture content.

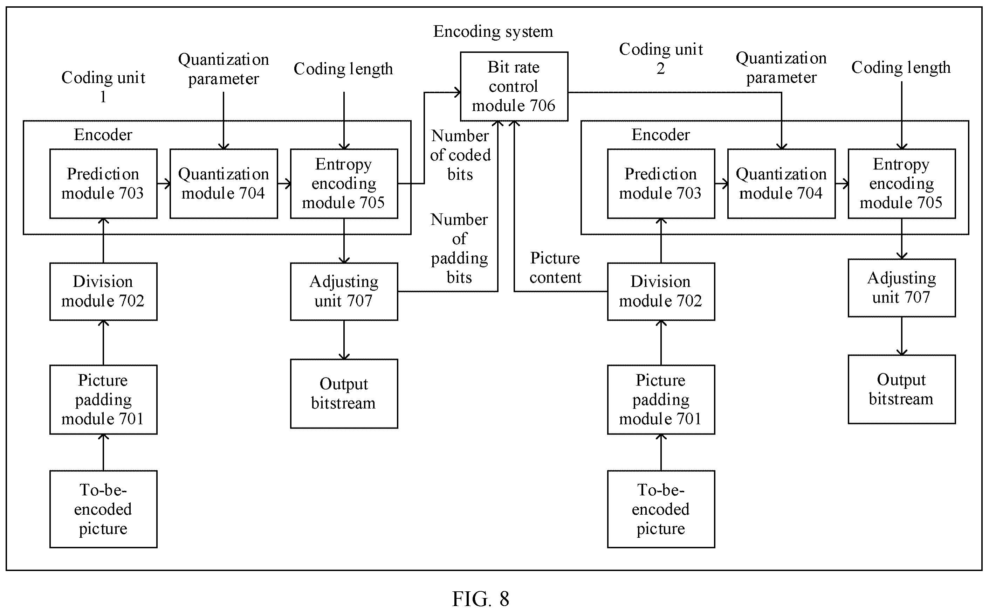

As shown in FIG. 8, the encoding system may further include an adjusting unit 707.

The adjusting unit 707 is configured to adjust compression performance of the coding units. For example, the adjusting unit 707 may adjust the compression performance of the coding units by adjusting the number of padding bits.

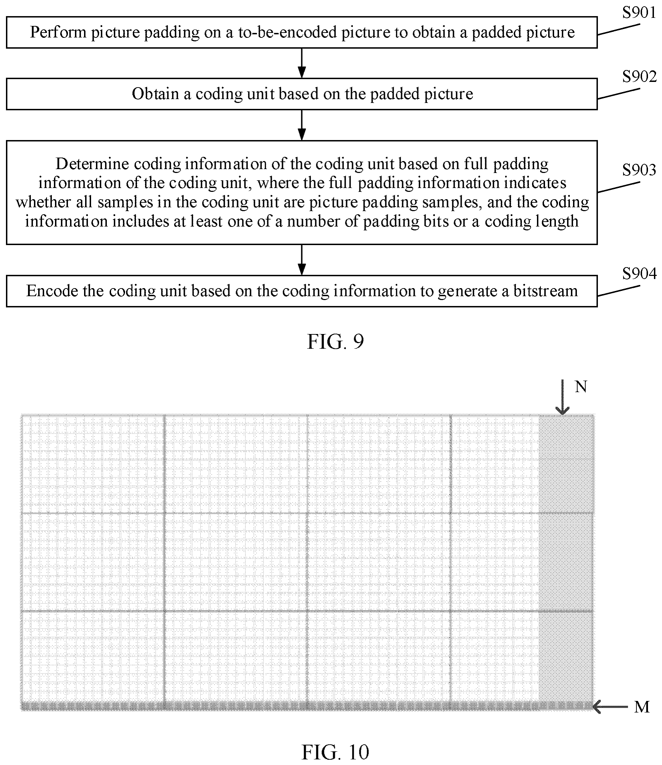

FIG. 9 shows an encoding method according to an embodiment of this application. As shown in FIG. 9, the method includes the following steps.

S901: Perform picture padding on a to-be-encoded picture to obtain a padded picture.

In a possible implementation, the to-be-encoded picture may be divided into a plurality of slices, and then the to-be-encoded picture is padded with N columns of samples on a right boundary of a last column of the slices, to obtain the padded picture. N is a positive integer. A sample may be understood as a pixel of a picture, and a slice includes a plurality of samples.

It may be understood that, compared with performing picture padding on each slice, performing picture padding on only the last column of the slices of the picture can reduce implementation costs and power consumption of hardware in picture padding.

In a possible implementation, the to-be-encoded picture may be padded with the N columns of samples on the right boundary of the last column of slices, and the picture is padded with M columns of samples on a lower boundary of a last row of the slices, to obtain the padded picture. N and M are both positive integers.

For example, as shown in FIG. 10, a to-be-encoded picture may be first divided into 12 slices. It is assumed that a total number of columns that need to be padded horizontally in the picture is N, and a total number of columns that need to be padded vertically in the picture is M. The picture may be padded with N columns of samples on a right boundary of a last column of the slices, to obtain a padded picture. The padding manner is to copy a nearest valid sample column on a left side. In addition to copying the nearest valid sample column, the padding manner may alternatively be default value (an agreed value) padding or to copy a valid sample column at another position. Then, the picture is padded with M columns of samples on a lower boundary of a last row of the slices in the default value padding manner. In addition to the default value padding, the padding manner may alternatively be to copy a valid sample row on an upper side.

S902: Obtain a coding unit based on the padded picture.

A specific implementation of obtaining the coding unit based on the padded picture may be any manner that can be figured out by persons skilled in the art. This is not limited in embodiments of this application. For example, each slice obtained by dividing the padded picture may be divided into one or more coding units for coding.

S903: Determine coding information of the coding unit based on full padding information of the coding unit, where

the full padding information indicates whether all samples in the coding unit are picture padding samples, and the coding information includes at least one of a number of padding bits or a coding length. The picture padding sample is a sample obtained through picture padding.

In a possible implementation, the full padding information further indicates whether the coding unit is located in a target slice of the padded picture, and the target slice is a horizontally picture padded slice.

In a possible implementation, the full padding information may be represented by a full padding flag PadFlag.

For example, if all the samples in the current coding unit are obtained through padding, the full padding flag of the current coding unit is 1. Otherwise, the full padding flag of the current coding unit is 0.

In other words, if the full padding flag of the coding unit is 1, it represents that all the samples in the coding unit are picture padding samples; and if the full padding flag of the coding unit is 0, it represents that not all the samples in the coding unit are picture padding samples.

For another example, if all the samples in the current coding unit are obtained through padding, and the current coding unit is located in the horizontally padded slice, the full padding flag of the current coding unit is 1; otherwise, the full padding flag of the current coding unit is 0.

In other words, if the full padding flag of the coding unit is 1, it represents that all the samples in the coding unit are picture padding samples, and the coding unit is located in the horizontally picture padded slice; and if the full padding flag of the coding unit is 0, it represents that not all the samples in the coding unit are picture padding samples, and/or the coding unit is not located in the horizontally picture padded slice.

In a possible implementation, when the coding unit is a target coding unit, the number of padding bits may be determined based on an actual number of bits of the coding unit and a first preset number of bits, where the target coding unit is a coding unit in which all samples are picture padding samples, and the actual number of bits is bits of a to-be-padded bitstream corresponding to the coding unit.

For example, when the full padding information of the coding unit indicates whether all the samples in the coding unit are picture padding samples (that is, the full padding flag of the coding unit is 1), the number of padding bits may be determined based on the actual number of bits of the coding unit and the first preset number of bits.

Optionally, the number BitsGap of padding bits may meet: $BitsGap=Max(X0-BCU, 0)$.

BCU is the bits of the to-be-padded bitstream corresponding to the coding unit (that is, an actual number of coded bits obtained by encoding a current coding block), and X0 is the first preset number of bits (that is, an agreed total number of bits of the bitstream (bitstream) corresponding to the coding unit when the full padding flag is 1). The value of X0 may be obtained by multiplying an original number of bits of the input coding unit by a target compression ratio, or may be obtained by adjusting the foregoing obtained value based on a header information overhead and a coding margin.

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, then a number of padding bits is determined based on an actual number of bits of the coding unit and the first preset number of bits, and next an initial bitstream (that is, the to-be-padded bitstream) generated for the fully padded coding unit is padded with a bit based on the number of padding bits to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

It should be noted that, when the coding unit is a non-target coding unit, it may be determined that the number of padding bits is 0, that is, no padding is performed on a bitstream of the non-target coding unit. Alternatively, the number of padding bits may be determined in another manner. This is not limited in embodiments of this application.

In a possible implementation, when the coding unit is the target coding unit, the coding length may be determined based on a header information overhead of the coding unit, a second preset number of bits, and a number of samples in the coding unit, where the target coding unit is a coding unit in which all samples are picture padding samples.

For example, when the full padding information of the coding unit indicates whether all the samples in the coding unit are picture padding samples (that is, the full padding flag of the coding unit is 1), the coding length may be determined based on the header information overhead of the coding unit, the second preset number of bits, and the number of samples in the coding unit.

Optionally, the coding length Bpppad may meet: Bpppad=(X1-X2)/Cusize.

X1 is the second preset number of bits (that is, an agreed total number of bits of the bitstream (bitstream) corresponding to the fully padded coding unit), X2 is the header information overhead of the current coding unit, and Cusize is the number of samples in the coding unit.

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, next a coding length is determined based on a header information overhead of the coding unit, the second preset number of bits, and a number of samples in the coding unit, and then fixed-length encoding is performed on the coding unit based on the coding length to generate a bitstream, to increase a number of coded bits of the coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

In a possible implementation, the target coding unit is a coding unit in which all samples are picture padding samples and that is located in the target slice of the padded picture.

It should be noted that, when the coding unit is a non-target coding unit, the coding length may not be determined. Alternatively, the coding length may be determined in another manner. This is not limited in embodiments of this application.

S904: Encode the coding unit based on the coding information to generate a bitstream.

In a possible implementation, the coding unit may be encoded to generate a to-be-padded bitstream. The to-be-padded bitstream is padded with a bit based on the number of padding bits, to obtain the bitstream.

For example, when the full padding information of the coding unit indicates whether all the samples in the coding unit are picture padding samples (that is, the full padding flag of the coding unit is 1), after the to-be-padded bitstream is obtained by encoding the coding unit, the to-be-padded bitstream may be additionally padded with BitsGap (the number of padding bits) bits. Content of the padding bits may be BitsGap 0s, BitsGap 1s, or other bit content. This is not limited in embodiments of this application.

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and an initial bitstream (that is, the to-be-padded bitstream) generated for the fully padded coding unit is padded with a bit to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

It should be noted that, when the coding unit is a non-target coding unit (that is, the full padding flag of the coding unit is 0), the bitstream generated by encoding the coding unit may not be additionally padded with a bit, or may be additionally padded with a bit in another manner. This is not limited in embodiments of this application.

In a possible implementation, fixed-length encoding may be performed on the coding unit based on the coding length to generate the bitstream.

For example, when the full padding information of the coding unit indicates whether all the samples in the coding unit are picture padding samples (that is, the full padding flag of the coding unit is 1), fixed-length encoding may be performed on the coding unit based on the coding length Bpppad.

It can be learned that, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and then fixed-length encoding is performed on the coding unit based on a coding length to generate a bitstream, to increase a number of coded bits of the coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

It should be noted that, when the coding unit is a non-target coding unit (that is, the full padding flag of the coding unit is 0), fixed-length encoding or another encoding manner may be used to encode the coding unit. This is not limited in embodiments of this application.

In a related technology, when the padded picture is coded, if there are excessive padding content in a slice and the padding content is simple, a fully padded coding unit in the slice occupies fewer coded bits, and correspondingly, a number of coded bits for a non-fully padded coding unit in the slice are more abundant than that in another slice without padding content or with less padding content. Consequently, reconstruction quality of non-padding content in the slice is different from that in another slice, and subjective quality of the padded picture is uneven.

However, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and then a coding parameter of the fully padded coding unit is adjusted to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

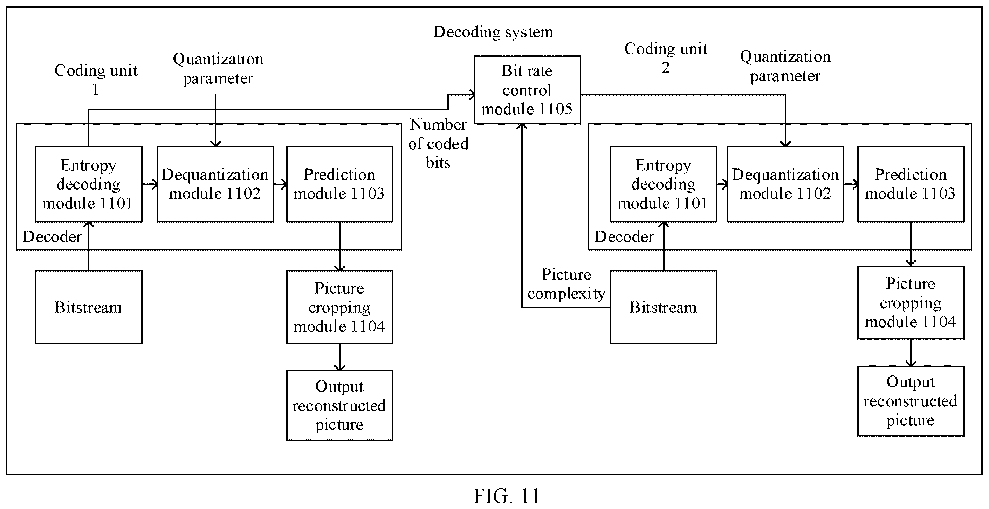

An embodiment of this application provides a decoding method, to balance the subjective quality of the padded picture. The decoding method is applicable to a decoding system. FIG. 11 shows a possible existence form of the decoding system.

As shown in FIG. 11, the decoding system includes an entropy decoding module 1101, a dequantization module 1102, a prediction module 1103, a picture cropping module 1104, and a bit rate control module 1105.

After a bitstream (bitstream) corresponding to each coding unit is input into a decoder of the decoding system, a decoding process, for example, entropy decoding, dequantization, and prediction, is performed. A fully padded coding unit needs to be decoded based on the foregoing coding length Bpppad, to obtain a reconstructed picture corresponding to the coding unit. The reconstructed picture needs to be cropped before being output, and finally a picture of original resolution is output. The cropping means cropping a padding area in the reconstructed picture.

The entropy decoding module 1101 is configured to perform entropy decoding on the bitstream (bitstream) corresponding to the coding unit. In addition, picture complexity may be further obtained based on the bitstream (bitstream) corresponding to the coding unit.

The dequantization module 1102 is configured to dequantize the bitstream (bitstream) corresponding to the coding unit based on a quantization parameter.

The prediction module 1103 is configured to perform prediction on the bitstream (bitstream) corresponding to the coding unit.

The picture cropping module 1104 is configured to crop a padding area in the reconstructed picture.

The bit rate control module 1105 is configured to adjust an output bit rate based on a number of coded bits and/or the picture complexity.

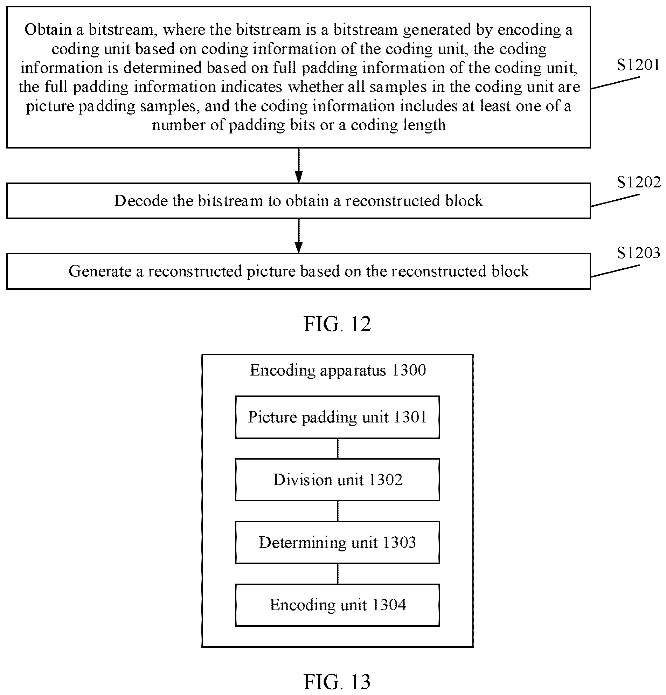

FIG. 12 shows a decoding method according to an embodiment of this application. As shown in FIG. 12, the method includes:

S1201: Obtain a bitstream, where the bitstream is a bitstream generated by encoding a coding unit based on coding information of the coding unit, the coding information is determined based on full padding information of the coding unit, the full padding information indicates whether all samples in the coding unit are picture padding samples, and the coding information includes at least one of a number of padding bits or a coding length.

In a possible implementation, the full padding information further indicates whether the coding unit is located in a target slice of the padded picture, and the target slice is a horizontally padded slice of the picture.

S1202: Decode the bitstream to obtain a reconstructed block.

In a possible implementation, when the bitstream is a bitstream of a target coding unit, the bitstream is decoded based on the coding length to obtain the reconstructed block, where the target coding unit is a coding unit in which all samples are picture padding samples.

In a possible implementation, the target coding unit is a coding unit in which all samples are picture padding samples and that is located in the target slice of the padded picture.

S1203: Generate a reconstructed picture based on the reconstructed block.

In a related technology, when the padded picture is coded, if there are excessive padding content in a slice and the padding content is simple, a fully padded coding unit in the slice occupies fewer coded bits, and correspondingly, a number of coded bits for a non-fully padded coding unit in the slice are more abundant than that in another slice without padding content or with less padding content. Consequently, reconstruction quality of non-padding content in the slice is different from that in another slice, and subjective quality of the padded picture is uneven.

However, in the method provided in this embodiment of this application, coding information of a coding unit may be determined based on full padding information of the coding unit, and then the coding unit is encoded based on the coding information to generate a bitstream. In this way, a fully padded coding unit in a slice may be determined based on full padding information, and then a coding parameter of the fully padded coding unit is adjusted to increase a number of coded bits of the fully padded coding unit, so that a number of coded bits of a non-fully padded coding unit in the slice is reduced, thereby reducing a difference between reconstruction quality of non-padded content in the slice and that in another slice, and avoiding uneven subjective quality of the padded picture, so as to balance the subjective quality of the padded picture.

The following describes, with reference to FIG. 13, an encoding apparatus configured to perform the foregoing encoding method.

It may be understood that, to implement the foregoing function, the encoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. Persons skilled in the art may use different methods to implement the described functions for each particular application with reference to embodiments, but it should not be considered that the implementation goes beyond the scope of embodiments of this application.

In embodiments of this application, the encoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 13 is a possible composition diagram of the encoding apparatus in the foregoing embodiments. As shown in FIG. 13, the encoding apparatus 1300 may include a picture padding unit 1301, a division unit 1302, a determining unit 1303, and an encoding unit 1304.

The picture padding unit 1301 is configured to perform picture padding on a to-be-encoded picture to obtain a padded picture.

The division unit 1302 is configured to obtain a coding unit based on the padded picture.

The determining unit 1303 is configured to determine coding information of the coding unit based on full padding information of the coding unit, where the full padding information indicates whether all samples in the coding unit are picture padding samples, and the coding information includes at least one of a number of padding bits or a coding length.

The encoding unit 1304 is configured to encode the coding unit based on the coding information to generate a bitstream.

In a possible implementation, the encoding unit 1304 is specifically configured to: encode the coding unit to generate a to-be-padded bitstream; and pad the to-be-padded bitstream with a bit based on the number of padding bits, to obtain the bitstream.

In a possible implementation, the encoding unit 1304 is specifically configured to perform fixed-length encoding on the coding unit based on the coding length to generate the bitstream.

In a possible implementation, the determining unit 1303 is specifically configured to: when the coding unit is a target coding unit, determine the number of padding bits based on an actual number of bits of the coding unit and a first preset number of bits, where the target coding unit is a coding unit in which all samples are picture padding samples, and the actual number of bits is a number of bits of the to-be-padded bitstream corresponding to the coding unit.

In a possible implementation, the determining unit 1303 is specifically configured to: when the coding unit is the target coding unit, determine the coding length based on a header information overhead of the coding unit, a second preset number of bits, and a number of samples in the coding unit, where the target coding unit is a coding unit in which all samples are picture padding samples.

In a possible implementation, the full padding information further indicates whether the coding unit is located in a target slice of the padded picture, and the target slice is a horizontally picture padded slice.

In a possible implementation, the target coding unit is a coding unit in which all samples are picture padding samples and that is located in the target slice of the padded picture.

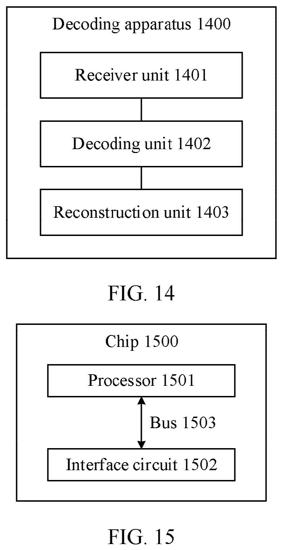

The following describes, with reference to FIG. 14, a decoding apparatus configured to perform the decoding method.

It may be understood that, to implement the foregoing function, the decoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. Persons skilled in the art may use different methods to implement the described functions for each particular application with reference to embodiments, but it should not be considered that the implementation goes beyond the scope of embodiments of this application.

In embodiments of this application, the decoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 14 is a possible composition diagram of the decoding apparatus in the foregoing embodiments. As shown in FIG. 14, the decoding apparatus 1400 may include a receiver unit 1401, a decoding unit 1402, and a reconstruction unit 1403.

The receiver unit 1401 is configured to obtain a bitstream, where the bitstream is a bitstream generated by encoding a coding unit based on coding information of the coding unit, the coding information is determined based on full padding information of the coding unit, the full padding information indicates whether all samples in the coding unit are picture padding samples, and the coding information includes at least one of a number of padding bits or a coding length.

The decoding unit 1402 is configured to decode the bitstream to obtain a reconstructed block.

The reconstruction unit 1403 is configured to generate a reconstructed picture based on the reconstructed block.

In a possible implementation, the decoding unit 1402 is specifically configured to: when the bitstream is a bitstream of a target coding unit, decode the bitstream based on the coding length to obtain the reconstructed block, where the target coding unit is a coding unit in which all samples are picture padding samples.

In a possible implementation, the full padding information further indicates whether the coding unit is located in a target slice of the padded picture, and the target slice is a horizontally padded slice of the picture.

In a possible implementation, the target coding unit is a coding unit in which all samples are picture padding samples and that is located in the target slice of the padded picture.

In a possible implementation, the reconstruction unit 1403 is further configured to crop a picture padding area in the reconstructed picture.

An embodiment of this application further provides an encoding apparatus. The apparatus includes at least one processor. When the at least one processor executes program code or instructions, the foregoing related method steps are implemented to implement the encoding method in the foregoing embodiment.

Optionally, the apparatus may further include at least one memory, and the at least one memory is configured to store the program code or the instructions.

An embodiment of this application further provides a decoding apparatus. The apparatus includes at least one processor. When the at least one processor executes program code or instructions, the foregoing related method steps are implemented to implement the decoding method in the foregoing embodiment.

Optionally, the apparatus may further include at least one memory, and the at least one memory is configured to store the program code or the instructions.

An embodiment of this application further provides a computer storage medium. The computer storage medium stores computer instructions. When the computer instructions are run on an encoding apparatus, the encoding apparatus is enabled to perform the foregoing related method steps to implement the encoding and decoding methods in the foregoing embodiments.

An embodiment of this application further provides a computer program product. When the computer program product runs on a computer, the computer is enabled to perform the foregoing related steps, to implement the encoding and decoding methods in the foregoing embodiments.

An embodiment of this application further provides an encoding and decoding apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the encoding and decoding methods in the foregoing method embodiments.

FIG. 15 is a diagram of a structure of a chip 1500. The chip 1500 includes one or more processors 1501 and an interface circuit 1502. Optionally, the chip 1500 may further include a bus 1503.

The processor 1501 may be an integrated circuit chip and has a signal processing capability. In an implementation process, the steps of the foregoing encoding method and the decoding method may be implemented by using an integrated logic circuit of hardware in the processor 1501, or by using instructions in a form of software.

Optionally, the processor 1501 may be a general-purpose processor, a digital signal processor (digital signal processing, DSP), an application-specific integrated circuit (application specific integrated circuit, ASIC), a field-programmable gate array (field-programmable gate array, FPGA) or another programmable logic device, a discrete gate or a transistor logic device, or a discrete hardware component. The processor 1501 may implement or perform the methods and steps that are disclosed in embodiments of this application. The general-purpose processor may be a microprocessor, or the processor may be any conventional processor or the like.

The interface circuit 1502 may be configured to send or receive data, instructions, or information. The processor 1501 may perform processing by using data, instructions, or other information received by the interface circuit 1502, and may send processed information by using the interface circuit 1502.

Optionally, the chip further includes a memory.

The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the encoding apparatus or a DOP in embodiments of this application. Optionally, the interface circuit 1502 may be configured to output an execution result of the processor 1501. For the encoding and decoding methods provided in one or more of embodiments of this application, refer to the foregoing embodiments. Details are not described herein again.

It should be noted that functions corresponding to the processor 1501 and the interface circuit 1502 may be implemented by using a hardware design, or may be implemented by using a software design, or may be implemented by using a combination of software and hardware. This is not limited herein.

The apparatus, the computer storage medium, the computer program product, or the chip provided in embodiments are all configured to perform the corresponding methods provided above. Therefore, for beneficial effect that can be achieved by the apparatus, the computer storage medium, the computer program product, or the chip, refer to beneficial effect of the corresponding methods provided above. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application. However, the protection scope of embodiments of this application is not limited thereto. Any change or replacement readily figured out by persons skilled in the art within the technical scope disclosed in embodiments of this application shall fall within the protection scope of embodiments of this application. Therefore, the protection scope of embodiments of this application shall be subject to the protection scope of the claims.

## Claims

1. An encoding method, comprising:

    performing picture padding on a to-be-encoded picture to obtain a padded picture;
    obtaining a coding unit based on the padded picture;
    determining coding information of the coding unit based on full padding information of the coding unit, wherein the full padding information indicates whether all samples in the coding unit are picture padding samples, and the coding information comprises at least one of a number of padding bits or a coding length; and
    encoding the coding unit based on the coding information to generate a bitstream.

2. The method according to claim 1, wherein the coding information comprises the number of padding bits, and encoding the coding unit based on the coding information to generate the bitstream comprises:

    encoding the coding unit to generate a to-be-padded bitstream; and
    padding the to-be-padded bitstream with a bit based on the number of padding bits, to obtain the bitstream.

3. The method according to claim 1 or 2, wherein the coding information comprises the coding length, and encoding the coding unit based on the coding information to generate the bitstream comprises:
performing fixed-length encoding on the coding unit based on the coding length to generate the bitstream.

4. The method according to any one of claims 1 to 3, wherein the coding information comprises the number of padding bits, and determining the coding information of the coding unit based on the full padding information of the coding unit comprises:
when the coding unit is a target coding unit, determining the number of padding bits based on an actual number of bits of the coding unit and a first preset number of bits, wherein the target coding unit is a coding unit in which all samples are picture padding samples, and the actual number of bits is a number of bits of the to-be-padded bitstream corresponding to the coding unit.

5. The method according to any one of claims 1 to 4, wherein the coding information comprises the coding length, and determining the coding information of the coding unit based on the full padding information of the coding unit comprises:
when the coding unit is the target coding unit, determining the coding length based on a header information overhead of the coding unit, a second preset number of bits, and a number of samples in the coding unit, wherein the target coding unit is a coding unit in which all samples are picture padding samples.

6. The method according to claim 4 or 5, wherein the full padding information further indicates whether the coding unit is located in a target slice of the padded picture, and the target slice is a horizontally picture padded slice.

7. The method according to claim 6, wherein the target coding unit is a coding unit in which all samples are picture padding samples and that is located in the target slice of the padded picture.

8. A decoding method, wherein the method comprises:

    obtaining a bitstream, wherein the bitstream is a bitstream generated by encoding a coding unit based on coding information of the coding unit, the coding information is determined based on full padding information of the coding unit, the full padding information indicates whether all samples in the coding unit are picture padding samples, and the coding information comprises at least one of a number of padding bits or a coding length;
    decoding the bitstream to obtain a reconstructed block; and
    generating a reconstructed picture based on the reconstructed block.

9. The method according to claim 8, wherein the coding information comprises the coding length, and decoding the bitstream to obtain the reconstructed block comprises:
when the bitstream is a bitstream of a target coding unit, decoding the bitstream based on the coding length to obtain the reconstructed block, wherein the target coding unit is a coding unit in which all samples are picture padding samples.

10. The method according to claim 9, wherein the full padding information further indicates whether the coding unit is located in a target slice of a padded picture, and the target slice is a horizontally padded slice of the picture.

11. The method according to claim 10, wherein the target coding unit is a coding unit in which all samples are picture padding samples and that is located in the target slice of the padded picture.

12. The method according to any one of claims 8 to 11, wherein the method further comprises: cropping a picture padding area in the reconstructed picture.

**13.** An encoding apparatus, wherein the apparatus comprises a picture padding unit, a division unit, a determining unit, and an encoding unit;

the picture padding unit is configured to perform picture padding on a to-be-encoded picture to obtain a padded picture;
the division unit is configured to obtain a coding unit based on the padded picture;
the determining unit is configured to determine coding information of the coding unit based on full padding information of the coding unit, wherein the full padding information indicates whether all samples in the coding unit are picture padding samples, and the coding information comprises at least one of a number of padding bits or a coding length; and
the encoding unit is configured to encode the coding unit based on the coding information to generate a bitstream.

**14.** The apparatus according to claim 13, wherein the coding information comprises the number of padding bits, and the encoding unit is specifically configured to:

encode the coding unit to generate a to-be-padded bitstream; and
pad the to-be-padded bitstream with a bit based on the number of padding bits, to obtain the bitstream.

**15.** The apparatus according to claim 13 or 14, wherein the coding information comprises the coding length, and the encoding unit is specifically configured to:
perform fixed-length encoding on the coding unit based on the coding length to generate the bitstream.

**16.** The apparatus according to any one of claims 13 to 15, wherein the coding information comprises the number of padding bits, and the determining unit is specifically configured to:
when the coding unit is a target coding unit, determine the number of padding bits based on an actual number of bits of the coding unit and a first preset number of bits, wherein the target coding unit is a coding unit in which all samples are picture padding samples, and the actual number of bits is a number of bits of the to-be-padded bitstream corresponding to the coding unit.

**17.** The apparatus according to any one of claims 13 to 16, wherein the coding information comprises the coding length, and the determining unit is specifically configured to:
when the coding unit is the target coding unit, determine the coding length based on a header information overhead of the coding unit, a second preset number of bits, and a number of samples in the coding unit, wherein the target coding unit is a coding unit in which all samples are picture padding samples.

**18.** The apparatus according to claim 16 or 17, wherein the full padding information further indicates whether the coding unit is located in a target slice of the padded picture, and the target slice is a horizontally picture padded slice.

**19.** The apparatus according to claim 18, wherein the target coding unit is a coding unit in which all samples are picture padding samples and that is located in the target slice of the padded picture.

**20.** A decoding apparatus, wherein the apparatus comprises a receiver unit, a decoding unit, and a reconstruction unit;

the receiver unit is configured to obtain a bitstream, wherein the bitstream is a bitstream generated by encoding a coding unit based on coding information of the coding unit, the coding information is determined based on full padding information of the coding unit, the full padding information indicates whether all samples in the coding unit are picture padding samples, and the coding information comprises at least one of a number of padding bits or a coding length;
the decoding unit is configured to decode the bitstream to obtain a reconstructed block; and
the reconstruction unit is configured to generate a reconstructed picture based on the reconstructed block.

**21.** The apparatus according to claim 20, wherein the coding information comprises the coding length, and the decoding unit is specifically configured to:
when the bitstream is a bitstream of a target coding unit, decode the bitstream based on the coding length to obtain the reconstructed block, wherein the target coding unit is a coding unit in which all samples are picture padding samples.

**22.** The apparatus according to claim 21, wherein the full padding information further indicates whether the coding unit is located in a target slice of a paaded picture, and the target slice is a horizontally padded slice of the picture.

**23.** The apparatus according to claim 22, wherein the target coding unit is a coding unit in which all samples are picture padding samples and that is located in the target slice of the padded picture.

**24.** The apparatus according to any one of claims 20 to 23, wherein the reconstruction unit is further configured to:

crop a picture padding area in the reconstructed picture.

25. An encoding apparatus, comprising at least one processor and a memory, wherein the at least one processor executes a program or instructions stored in the memory, to enable the encoding apparatus to implement the method according to any one of claims 1 to 7.

26. A decoding apparatus, comprising at least one processor and a memory, wherein the at least one processor executes a program or instructions stored in the memory, to enable the decoding apparatus to implement the method according to any one of claims 8 to 12.

27. A computer-readable storage medium, configured to store a computer program, wherein when the computer program is run on a computer or a processor, the computer or the processor is enabled to implement the method according to any one of claims 1 to 7 or any one of claims 8 to 12.

28. A computer program product, wherein the computer program product comprises instructions, and when the instructions are run on a computer or a processor, the computer or the processor is enabled to implement the method according to any one of claims 1 to 7 or any one of claims 8 to 12.

FIG. 1a

FIG. 1b

FIG. 2

FIG. 3

| B2 | | | B1 | B0 |
|---|---|---|---|---|

C

A1

A0

T

FIG. 4

500

Video coding device

510

520

Processor

530

550

Coding module

540

Receiver unit

Transmitter unit

570

560

Memory

Downstream port

Upstream port

FIG. 5

FIG. 6

Encoding system

Coding unit 1 — Quantization parameter — Coding length — Bit rate control module 706 — Coding unit 2 — Quantization parameter — Coding length

**Encoder (Coding unit 1)**

Prediction module 703 → Quantization module 704 → Entropy encoding module 705

Division module 702

Picture padding module 701

To-be-encoded picture

Entropy encoding module 705 → Output bitstream

Number of coded bits

Picture content

**Encoder (Coding unit 2)**

Prediction module 703 → Quantization module 704 → Entropy encoding module 705

Division module 702

Picture padding module 701

To-be-encoded picture

Output bitstream

EP 4 668 747 A1

FIG. 7

Encoding system

Coding unit 2

Encoder

Coding length → Entropy encoding module 705 → Adjusting unit 707 → Output bitstream

Quantization parameter → Quantization module 704

Prediction module 703 → Quantization module 704

Division module 702 → Prediction module 703

Picture padding module 701 → Division module 702

To-be-encoded picture → Picture padding module 701

Bit rate control module 706

Picture content

Number of coded bits

Number of padding bits

Coding unit 1

Encoder

Coding length → Entropy encoding module 705 → Adjusting unit 707 → Output bitstream

Quantization parameter → Quantization module 704

Prediction module 703

Division module 702

Picture padding module 701

To-be-encoded picture

FIG. 8

Perform picture padding on a to-be-encoded picture to obtain a padded picture

S901

Obtain a coding unit based on the padded picture

S902

Determine coding information of the coding unit based on full padding information of the coding unit, where the full padding information indicates whether all samples in the coding unit are picture padding samples, and the coding information includes at least one of a number of padding bits or a coding length

S903

Encode the coding unit based on the coding information to generate a bitstream

S904

FIG. 9

N

M

FIG. 10

EP 4 668 747 A1

**Decoding system**

Coding unit 1 · Quantization parameter · Bit rate control module 1105 · Coding unit 2 · Quantization parameter

Number of coded bits

Picture complexity

**Decoder** (Coding unit 1):
- Entropy decoding module 1101 → Dequantization module 1102 → Prediction module 1103
- Bitstream → Entropy decoding module 1101
- Prediction module 1103 → Picture cropping module 1104 → Output reconstructed picture

**Decoder** (Coding unit 2):
- Entropy decoding module 1101 → Dequantization module 1102 → Prediction module 1103
- Bitstream → Entropy decoding module 1101
- Prediction module 1103 → Picture cropping module 1104 → Output reconstructed picture

FIG. 11

Obtain a bitstream, where the bitstream is a bitstream generated by encoding a coding unit based on coding information of the coding unit, the coding information is determined based on full padding information of the coding unit, the full padding information indicates whether all samples in the coding unit are picture padding samples, and the coding information includes at least one of a number of padding bits or a coding length

S1201

Decode the bitstream to obtain a reconstructed block

S1202

Generate a reconstructed picture based on the reconstructed block

S1203

FIG. 12

Encoding apparatus 1300

Picture padding unit 1301

Division unit 1302

Determining unit 1303

Encoding unit 1304

FIG. 13

Decoding apparatus 1400

Receiver unit 1401

Decoding unit 1402

Reconstruction unit 1403

FIG. 14

Chip 1500

Processor 1501

Bus 1503

Interface circuit 1502

FIG. 15

## INTERNATIONAL SEARCH REPORT

| International application No. |
|---|
| **PCT/CN2024/080069** |

### A. CLASSIFICATION OF SUBJECT MATTER

H04N19/563(2014.01)i; H04N19/13(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, WPABSC, ENTXTC, DWPI, ENTXT, CNKI, IEEE, JVET: 编码, 图像, 帧, 补充, 补入, 充入, 添加, 填补, 填充, 填料, 填入, 比特, 码长, 码字, 字节, 数据, 数, 量, 长度, 标识, 标志, 旗标, 信号, 信令, 信息, 语法, 指示, 字段, encode, image, frame, supplement, fill in, add, bit, code length, codeword, byte, data, number, quantity, length, identifier, flag, signal, information, syntax, indication, field

### C. DOCUMENTS CONSIDERED TO BE RELEVANT

| Category* | Citation of document, with indication, where appropriate, of the relevant passages | Relevant to claim No. |
|---|---|---|
| X | CN 105379284 A (RENESAS ELECTRONICS CORP.) 02 March 2016 (2016-03-02) description, paragraphs 31-262 | 1, 3, 8, 9, 13, 15, 20, 21 |
| Y | CN 105379284 A (RENESAS ELECTRONICS CORP.) 02 March 2016 (2016-03-02) description, paragraphs 31-262 | 2, 12, 14, 24-28 |
| Y | US 2012320970 A1 (DRUGEON VIRGINIE; NARROSCHKE MATTHIAS) 20 December 2012 (2012-12-20) description, paragraphs 13-268 | 2, 12, 14, 24-28 |
| A | CN 102668565 A (SK TELECOM CO., LTD.) 12 September 2012 (2012-09-12) entire document | 1-28 |
| A | CN 114402602 A (QUALCOMM INC.) 26 April 2022 (2022-04-26) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 May 2024** | **24 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080069**

| Patent document cited in search report | | | Publication date (day/month/year) | Patent family member(s) | | | Publication date (day/month/year) |
|---|---|---|---|---|---|---|---|
| CN | 105379284 | A | 02 March 2016 | US | 2016156926 | A1 | 02 June 2016 |
| | | | | US | 10356437 | B2 | 16 July 2019 |
| | | | | JPWO | 2015011752 | A1 | 02 March 2017 |
| | | | | JP | 6100904 | B2 | 22 March 2017 |
| | | | | TW | 201505422 | A | 01 February 2015 |
| | | | | TWI | 626842 | B | 11 June 2018 |
| | | | | KR | 20160034903 | A | 30 March 2016 |
| | | | | KR | 102167350 | B1 | 19 October 2020 |
| | | | | EP | 3026906 | A1 | 01 June 2016 |
| | | | | EP | 3026906 | A4 | 05 April 2017 |
| | | | | EP | 3026906 | B1 | 25 March 2020 |
| | | | | WO | 2015011752 | A1 | 29 January 2015 |
| US | 2012320970 | A1 | 20 December 2012 | US | 9204168 | B2 | 01 December 2015 |
| | | | | EP | 2533537 | A1 | 12 December 2012 |
| | | | | WO | 2012169184 | A1 | 13 December 2012 |
| | | | | JPWO | 2012169184 | A1 | 23 February 2015 |
| | | | | JP | 6090697 | B2 | 08 March 2017 |
| CN | 102668565 | A | 12 September 2012 | KR | 20150014416 | A | 06 February 2015 |
| | | | | KR | 101673028 | B1 | 07 November 2016 |
| | | | | US | 2015334401 | A1 | 19 November 2015 |
| | | | | US | 9344731 | B2 | 17 May 2016 |
| | | | | US | 2012207211 | A1 | 16 August 2012 |
| | | | | US | 9137545 | B2 | 15 September 2015 |
| | | | | KR | 20110043510 | A | 27 April 2011 |
| | | | | KR | 101534049 | B1 | 07 July 2015 |
| | | | | US | 2015334402 | A1 | 19 November 2015 |
| | | | | US | 9344732 | B2 | 17 May 2016 |
| | | | | HK | 1205610 | A1 | 18 December 2015 |
| CN | 114402602 | A | 26 April 2022 | US | 2021092454 | A1 | 25 March 2021 |
| | | | | US | 11412263 | B2 | 09 August 2022 |
| | | | | WO | 2021061799 | A1 | 01 April 2021 |
| | | | | EP | 4035371 | A1 | 03 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310290271